(19) **Europäisches Patentamt**
**European Patent Office**
**Office européen des brevets**

(11) **EP 2 212 732 B1**

(12) **EUROPEAN PATENT SPECIFICATION**

(45) Date of publication and mention
of the grant of the patent:
**01.07.2015 Bulletin 2015/27**

(51) Int Cl.:
***G02B 9/12*** (2006.01)     ***G02B 9/34*** (2006.01)
***G02B 13/00*** (2006.01)     ***G02B 13/18*** (2006.01)

(21) Application number: **08846686.7**

(22) Date of filing: **07.11.2008**

(86) International application number:
**PCT/US2008/012670**

(87) International publication number:
**WO 2009/061519 (14.05.2009 Gazette 2009/20)**

(54) **CUSTOMIZED DEPTH OF FIELD OPTICAL SYSTEM AND COMPACT FAST LENS ARCHITECTURE**

OPTISCHES SYSTEM MIT ANGEPASSTER ABBILDUNGSTIEFE UND KOMPAKTE SCHNELLE LINSENARCHITEKTUR

SYSTÈME OPTIQUE À PROFONDEUR DE CHAMP PERSONNALISÉ ET ARCHITECTURE DE LENTILLE RAPIDE COMPACTE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.11.2007 US 2262**
**08.02.2008 US 27355**

(43) Date of publication of application:
**04.08.2010 Bulletin 2010/31**

(73) Proprietor: **NANCHANG O-FILM OPTOELECTRONICS TECHNOLOGY LTD Economic Technological Development Zone Nanchang Jiangxi 33000 (CN)**

(72) Inventors:
• **GOLDENBERG, Ephraim**
**San Jose, CA 95134 (US)**
• **ENGELHARDT, Kai**
**San Jose, CA 95234 (US)**

• **SHABTAY, Gal**
**San Jose, CA 95134 (US)**
• **FELDMAN, Michael, R.**
**San Jose, CA 95134 (US)**
• **COHEN, Noy**
**San Jose, CA 95134 (US)**
• **DROR, Micha**
**CA 95134 (US)**
• **RESHIDKO, Pavel**
**San Jose, CA 95134 (US)**

(74) Representative: **Michalski Hüttermann & Partner Patentanwälte mbB Speditionstraße 21 40221 Düsseldorf (DE)**

(56) References cited:
**EP-A- 1 602 958**     **WO-A-2007/085658**
**WO-A-2007/119971**     **US-A1- 2005 094 292**
**US-A1- 2006 092 528**     **US-A1- 2007 070 525**

**Description**

CROSS-REFERENCE TO RELATED APPLICATION

This application claims the benefit of United States Provisional Application Nos. 61/002,262 filed November 7, 2007, and 61/027,355, filed February 8, 2008, the disclosures of which are incorporated herein by reference.

BACKGROUND OF THE INVENTION

The present invention is directed to optical systems and, more specifically, to optical systems that are located at a fixed position within an imaging system and that provide a customized depth of field and particularly in imaging applications where compact size is needed while maintaining good optical quality.

In recent years, the popularity of digital cameras has continued to increase. This growth is especially true for cameras, camera modules, or other imaging devices intended for integration within other small devices such as phones or personal digital assistants (PDAs). The use of digital image sensors such as a CCD or CMOS array has made the continuing miniaturization of these devices possible. Improvements in the image sensors has been ongoing and include providing smaller pixel sizes, greater numbers of pixels, smaller overall sensor areas, higher signal-to-noise ratios (SNR), and lower costs. In most of these devices, an imaging lens system focuses the image onto the sensor. As sensor and pixel size have decreased, consequent improvements in the lenses have become necessary.

The market for cameras has been driven largely by the number of pixels in an image sensor even if the quality of lenses used for focusing into these sensors has not improved as quickly. In an older imaging system, a lens would focus the image onto a relatively small number of pixels with adequate quality. Assuming that in a newer imaging system with smaller pixels that the overall image sensor size remains the same, but the same lens system were used in the new system as in the older one, the resolution that might be detected by the newer sensor would be higher, but the resolving power of the lens system would remain the same. If this lens system was not originally designed with higher quality than necessary for the less dense sensor, there will be no improvement in the resulting image in spite of its higher native resolution, and in fact this has often been the case. Overall image quality may indeed be somewhat worse as smaller pixel sensors have relatively less light-sensitive area, and so gather less light than a similar sized sensor array with less pixel density and may give a noisier image. In most current applications, overall sensor size has decreased along with the pixel size, leading to yet more stringent requirements of the lens system.

In many previous lens designs for compact cameras, a one- or two-lens system was acceptable to keep total camera size as small as possible. Image quality often suffered in these designs, as image degradation was expected from these cameras with relatively low pixel count. Over time, image quality has become a very important metric as the number of pixels in the image sensor has increased. Increased spatial resolution of the lens as well as proper correction of aberrations can noticeably improve image quality, but this has become very difficult to accomplish with lens systems incorporating only one or two lens components. Accordingly, use of lens systems with three (*e.g.*, as shown in U.S. Patent Application Publication No. 2005/0094292 A1, disclosing a three element optical system for imaging in conjunction with a sensor, generally having an aperture stop at or near the front surface of the lens element furthest from the sensor) or more (*e.g.,* a four element optical system as shown in U.S. Patent Application Publication No. 2006/0092528 disclosing an image pickup lens having an excellent optical image on a compact image pickup element with a large number of pixels, the elements made of different resins or glasses) lens components has become much more widespread. This has led to greater cost and complexity of the lens system, and commonly leads to a design that is not favorably compact, most especially in the direction of the optical axis as many potential applications are limited by the height of the total camera module which is heavily dependent on the lens system. In addition, as the area of the sensor array has become smaller, the amount of light reaching the sensor generally is less. To compensate for this, often a lower F number (F/#) is used in a compact camera than would normally be used in a camera with a larger sensor or with less constraint on the size of the lenses. Generally, a lower F/# corresponds to a larger aperture for a given focal length. Although this improves the light-gathering capability and thus the SNR, it generally has adverse effects on the depth-of-field of the image, as well as exacerbating aberrations from the lens system. One tactic to improve image quality under these constraints is to include one or more aspheric surfaces in the lens system. Although cost and complexity of manufacturing of such a lens is likely increased in these systems, the resulting improvement in image quality may be worthwhile.

As the total track length (TTL), that is, length along the optical axis, decreases, the overall camera size becomes thinner and may have a wider variety of applications. Although there is apparent use in very small portable devices, these cameras may also be used in other devices such as laptop computer cameras embedded in the screen, small security cameras, and others. Maintaining or even improving on image characteristics as the size of the camera shrinks is becoming increasingly important in the marketplace.

Also, in a conventional digital imaging system, light received by an optical system consisting of one or more lenses is directed onto an image plane at which an image sensor is located. The received light may be, for example, light reflected off of or light emitted by one or more objects located at various distances from the lens. The image sensor detects the image that is directed onto the image plane and generates raw data that may be processed by an image processor to produce an image that is available for storage or for viewing. In some systems, the raw image data may be stored and exported for later data processing. In such conventional systems, however, only objects located within a small range of distances are acceptably focused onto the image plane for a given lens position, namely, for a given distance between the lens or lenses and the image plane. Objects located outside this range of object distances, which is known as the depth of field, may be directed onto the image plane but are not acceptably focused and appear blurred in the final image. As a result, some objects in the processed image may appear in focus whereas other objects in the processed image appear out of focus depending on the distance of each object from the lens.

To focus objects located at other image distances using such conventional digital imaging systems, one or more lenses must be moved within the imaging system to change the focal length of the imaging system. However, such movement of the optics also causes objects that previously appeared in focus to now appear out-of focus. Thus, only a portion of the objects in an image will appear in focus regardless of lens position.

Recently, hand-held cellular telephones and various other devices have been introduced which incorporate a digital imaging system. Such devices often require the optical surfaces to remain at a fixed position within the imaging system, as it is not practical to include moving parts because of size and cost constraints, and thus their imaging systems have a fixed focal range. The fixed focus imaging systems that are used typically attain images having an acceptable sharpness for objects located at object distances greater than one-half of the hyperfocal distance, known as the standard working zone. For objects located closer than one-half of the hyperfocal distance, however, the image sharpness is not acceptable and worsens rapidly with decreasing object distance.

To enable the imaging systems in such devices to provide acceptable processed images over a wider range of object distances, a known approach is to modify the imaging system by including a blurring optical surface that blurs the image directed onto the image plane. Because the optical properties of the blurring optical surface are known, the blurred image can be digitally processed to obtain an in focus processed image. The blurring and subsequent digital processing of the image allows for a wider range of object distances at which the processed image appears acceptably sharp, thereby extending the depth of field of the imaging system.

The presence of the blurring element, however, also blurs the directed images of objects located within the standard working zone. As a result, the sharpness of the processed images of such objects decreases.

It is therefore desirable to provide a fixed focus optical system which improves the image quality of objects located closer than one-half of the hyperfocal distance.

A lens system according to the preamble of claim 1 is disclosed in US patent application no. US 2007/0070525 A1.

SUMMARY OF THE INVENTION

This object is achieved by a lens system as set forth in claim 1.

According to one or more embodiments of the subject disclosure, disclosed is a lens system. The lens system can comprise the following, fixed sequentially in order from an object side to an image side along an optical axis: an aperture stop, a first lens component, a second lens component, a third lens component, and a fourth lens component. Furthermore, four object side lens surfaces and four image side lens surfaces of the lens system are aspheric, the first lens component including positive refracting power, with a surface of the first lens component facing the object side including a convex shape. In additional aspects of this embodiment(s), the second lens component can include a meniscus shape and negative refractive power, with a surface of the second lens component facing the object side including a concave shape and a surface of the second lens component facing the image side including a convex shape. In further aspects, surfaces of the third and fourth lens components facing the object side can have a convex shape near the optical axis, and surfaces of the third and fourth lens components facing the image side can have a concave shape near the optical axis, the radii of curvature at the optical axis of the object size and image side of the third lens component being within about 40% of each other. Additionally, according to alternative or additional aspects, the lens system can include an F number of 2.4 or less, a ratio of total track length to an image circle diameter can be less than about 0.95 and a chromatic focal shift of the lens system can be limited to below about 45 microns across the visible spectrum.

In accordance with a comparative example, a fixed optical unit includes one or more fixed optical elements. The optical unit has a modulation transfer function (MTF) for a given object distance and a given spatial frequency associated with an imaging surface of an image sensor disposed at a selected distance from said fixed optical unit that varies with image distance such that the MTF is at a maximum at a selected image distance, decreases from about the maximum MTF to below a predefined threshold value within a first range of positive focus shifts corresponding to image distances less than the selected image distance, and decreases from about the maximum MTF but remains above the predefined threshold value over a second range of negative focus shifts corresponding to image distances greater than the selected image distance. The second range of negative focus shifts is larger than the first range of positive focus shifts.

Another comparative example of the imaging system includes a fixed optical unit as described above, an image sensor that defines the imaging surface and which is operable to generate raw data representing the light projected on the imaging surface by the optical element, and an image processor operable to process the raw data to enhance the MTF.

In accordance with another comparative example, a fixed optical unit includes one or more fixed optical elements. The optical unit is characterized by a modulation transfer function (MTF) for a given location in object space and a given spatial frequency that is associated with an image plane disposed at a selected image distance from the fixed optical unit. The MTF varies asymmetrically with image distance such that the MTF is at a maximum at a first image distance, decreases from about the maximum MTF to at least a predefined threshold value between the first image distance and a second image distance representing a first focus shift from the first image distance, and decreases from about the maximum MTF but remains above the predefined threshold value between the first image distance and a third image distance representing a second focus shift from the first image distance. The first and second focus shifts are opposite in direction. One of the first and second focus shifts is of greater magnitude than another of the first and second focus shifts.

In accordance with a further aspect of the invention, a lens system includes the following, fixed sequentially in order from an object side to an image side along an optical axis, a first member of a coupled stop, a first lens component, a second member of the coupled stop, a second lens component, and a third lens component, wherein all three object side lens surfaces and all three image side lens surfaces are aspheric, the first lens component including positive refractive power, with a surface of the first lens component facing the object side including a convex shape and a surface of the first lens component facing the image side including a concave shape near the optical axis, the second lens component including a meniscus shape and negative refractive power, with a surface of the second lens component facing the object side including a concave shape and a surface of the second lens component facing the image side including a convex shape, a surface of the third lens component facing the object side having a convex shape near the optical axis and a surface of the third lens component facing the image side having a concave shape near the optical axis, and a ratio of a total track length of the lens system to an image circle diameter being less than about 0.95.

According to this example, the lens may be characterized by F/# of less than about 2.6. The lens may be characterized by a field of view between about +/- 25 degrees and about +/- 40 degrees. The lens may be characterized by a field of view between about +/- 30 degrees and about +/- 35 degrees. The may be characterized by an F/# of about 2.4 and may include a modulation transfer function (MTF) for a given object distance and a given spatial frequency associated with an image plane at an image distance from said lens system with the MTF varying with image distance such that the MTF is at a maximum value greater than about 0.4 at a selected first image distance corresponding to a hyperfocal distance and decreases from about the maximum MTF to a lower value that is greater than about 0.25 at a selected second image distance corresponding to an object distance of about 250 millimeters. All three lens components may be made of plastic. The base curvatures of the surface of third lens component may face the object side and the surface of the third lens component may face the image side are substantially similar. An aperture may be includes between the second and third lens components. The lens may be characterized by F/# of about 2.4 and is further characterized by a total track length of less than about 4 millimeters and produces an image height greater than about 4.2 millimeters. The refractive index of all three lens components may be within a range between about 1.5 and 1.65, the first and third lens components may include an Abbe number between about 50 and 60, and the second lens component may include an Abbe number between about 20 and 30.

The embodiments of the imaging lens system described herein are typically compact, especially as measured along the optical axis, and generally use few components or elements. This allows the lens system to be manufactured inexpensively and to be particularly suited for use in a camera module within small devices such as camera phones or PDAs. High optical performance is achieved by the use of all aspheric lens surfaces.

The foregoing aspects, features and advantages of the present invention will be further appreciated when considered with reference to the following detailed description and accompanying drawings.

BRIEF DESCRIPTION OF THE DRAWINGS

FIG. 1 is a block diagram illustrating an example of a known digital imaging system.

FIG. 2 is a graphical representation of an example of a through-focus modulation transfer function (TF-MTF) curve for an optical system having only a focusing element.

FIG. 3 is a ray diagram illustrating examples of the imaging of objects at various image distances for an optical system which includes a blurring element.

FIG. 4 is a graphical representation of an example of a TF-MTF curve for an optical system which includes a blurring element.

FIG. 5 is a graphical representation of an example of a through-focus modulation transfer function (TF-MTF) curve for an optical system in accordance with the invention.

FIG. 6 is a block diagram illustrating an example of a digital imaging system in accordance with a comparative example of the invention.

FIG. 7 shows a cross-section of a comparative example of an exemplary lens system.

FIG. 8 shows a cross-section of a comparative example of an exemplary lens system that contains additional apertures.

FIG. 9 illustrates the TTL/image circle ratio using a ray diagram of the comparative example of the lens system in FIG. 8.

FIG. 10 shows the distortion of the comparative example of the lens system in FIG. 8.

FIG. 11 shows relative illumination for the comparative example of the lens system in FIG. 8.

FIGS. 12A, 12B, 12C and 12D show the polychromatic MTF of the comparative example of the lens system in FIG. 8 at various object distances.

FIGS. 13A and 13B show the polychromatic through-focus MTF of the comparative example of the lens system in FIG. 8 at various field angles at a given spatial frequency.

FIG. 14 shows a cross-section of an embodiment of an exemplary lens system according to the invention.

FIG. 15 illustrates the TTL/image circle ratio using a ray diagram of the embodiment of the lens system in FIG. 14.

FIGS. 16A-C provide distortion performance of the embodiment of the lens system in FIG. 14; FIG. 16A shows the field curvature, FIG. 16B shows the distortion of the embodiment of the same lens system, and FIG. 16C shows the chromatic focal shift of the same lens system.

FIG. 17 shows relative illumination for the embodiment of the lens system in FIG. 14.

FIGS. 18A, 18B, and 18C show the polychromatic MTF of the embodiment of the lens system in FIG. 14 at various object distances.

FIG. 19 shows the polychromatic through-focus MTF of the embodiment of the lens system in FIG. 14 at various field angles at a given spatial frequency.

FIG. 20 shows a cross-section of an embodiment of an exemplary lens system according to the invention.

FIG. 21 illustrates the TTL/image circle ratio using a ray diagram of the embodiment of the lens system in FIG. 20.

FIGS. 22A-C provide distortion performance of the embodiment of the lens system in FIG. 20; FIG. 20A shows the field curvature, FIG. 20B shows the distortion of the embodiment of the same lens system, and FIG. 20C shows the chromatic focal shift of the same lens system.

FIG. 23 shows relative illumination for the embodiment of the lens system in FIG. 20.

FIGS. 24A, 24B, and 24C show the polychromatic MTF of the embodiment of the lens system in FIG. 20 at various object distances.

FIG. 25 shows the polychromatic through-focus MTF of the embodiment of the lens system in FIG. 20 at various field angles at a given spatial frequency.

DETAILED DESCRIPTION

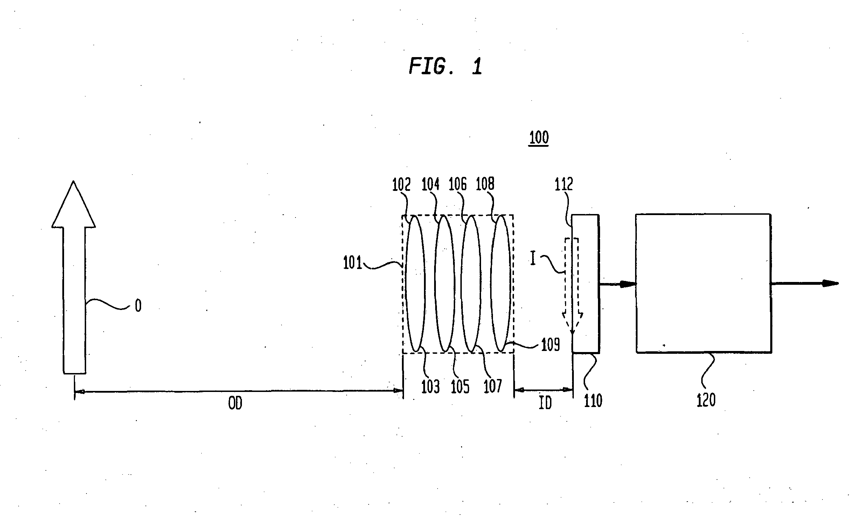

FIG. 1 is a block diagram depicting an example of a known digital imaging system 100. The digital imaging system 100 includes an optical system 101, an image sensor 110, and an image processor 120.

The optical system 102 receives light that is reflected off of, or that is emitted by, an object O which is located at object distance OD from the optical system. The optical system includes an aperture 101 and several optical elements or optical surfaces 102,...,109. One or more of the optical surfaces 102,...,109, may include positive power to provide a focusing function. Other optical surfaces 102,....,109 may include negative power or other functions, such as a blurring function. Other optical surfaces 102,...,109 may provide an additional function, such as correcting optical or chromatic aberrations. The optical surfaces 102,...,109 are depicted as convex lenses solely for illustrative purposes. The optical surfaces 102,...,109 may include other shapes, including for example concave, meniscus, and aspheric curvatures. Actually, each optical element may be a refractive element or maybe a diffractive element which, for example, may include one or more drop-in masks, circularly symmetric or circularly asymmetric phase masks, or circularly symmetric or circularly asymmetric aspheric lenses.

In the illustrated example, the image sensor 110 captures light directed by the optical system 101 at an image surface 112, converts the captured light into raw data representing the captured light, and delivers the raw data to the image processor 120. The image sensor may be, for example, a charge coupled device (CCD) or a CMOS digital image sensor.

The image processor 120 processes the raw data received from the image sensor 110 and generates a processed image that may be outputted to, for example, a memory device or a display device.

An object O is located at a given object distance OD from the optical system 101 and a focused image I is directed to a distance ID from the optical system 101. When the image surface 112 of the image sensor 110 is also located at distance ID from the optical system 101, the sharpest possible image is directed onto the image sensor 110. If the object O is moved nearer to or further from the optical system 101 but the position of the image surface does not change (or, conversely, if the image surface is moved but the object O remains at the same distance from the optical system 101), the sharpness of the projected image decreases. For a sufficiently small movement of the object O (or the image surface 112), the sharpness of the image remains within an acceptable tolerance, namely, the image directed onto the image plane is of sufficient sharpness for the image processor to provide an acceptable processed image. The range of object distances within which the image sharpness remains within this tolerance is referred to as the depth of field. Similarly, the range of distances within which the image surface 112 may be moved while the image sharpness remains within tolerance is referred to as the depth of focus.

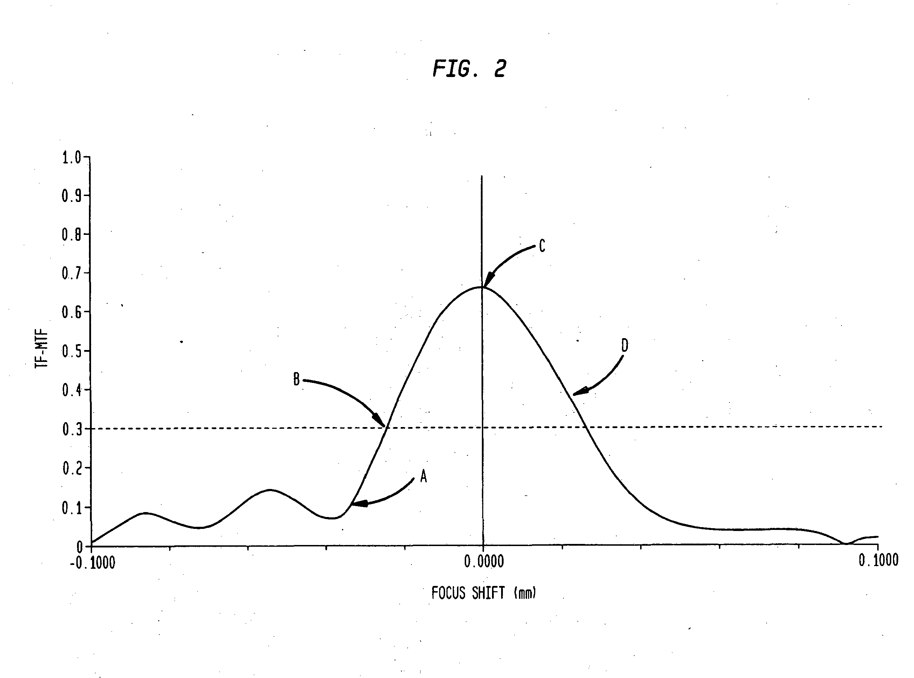

FIG. 2 illustrates a through-focus modulation transfer function (TF-MTF) curve of the known optical system 101 and for an image sensor 110 located on-axis. The TF-MTF curve is shown for a given wavelength of light and will generally shift with a change in wavelength. The TF-MTF is an indicator of the image sharpness as a function of the distance between the image surface 112 and the optical system 101. Though the TF-MTF curve is shown as a function of focus shift, i.e., as a function of image distance, an analogous curve may be generated as a function of object distance.

The TF-MTF curve shown in FIG. 2 is essentially bell shaped and peaks at a selected object distance C where the lens is considered to be focused, i.e., where the focal shift is zero. For example, the optical system may be focused such that the selected object distance C is the hyperfocal distance. The value of the TF-MTF decreases for positive focus shifts, i.e., with increasing object distance or decreasing image distance, but remains above 0.3 at least for all object distances up to a selected object distance D. The value of the TF-MTF also decreases with decreasing focus shift, i.e., with decreasing object distance or increasing image distance, but remains above 0.3 for focus shifts corresponding to object distances greater than a selected object distance B. The TF-MTF then decreases more rapidly with further decreasing focus shift such that its value is less than a minimum acceptably value at focus shifts corresponding to object distances greater than a selected object distance A. As an example, when the object distance C is the hyperfocal distance, the object distance D is typically $+\infty$, the object distance B is typically one-half the hyperfocal distance, and the object distance A is typically one-quarter of the hyperfocal distance. Where MTF values fall below a predetermined threshold, image contrast is lost and generally not recoverable through post-processing. For example, the minimum acceptable TF-MTF value may be 0.1, though greater or lesser values may be desirable for a given post-processing technique.

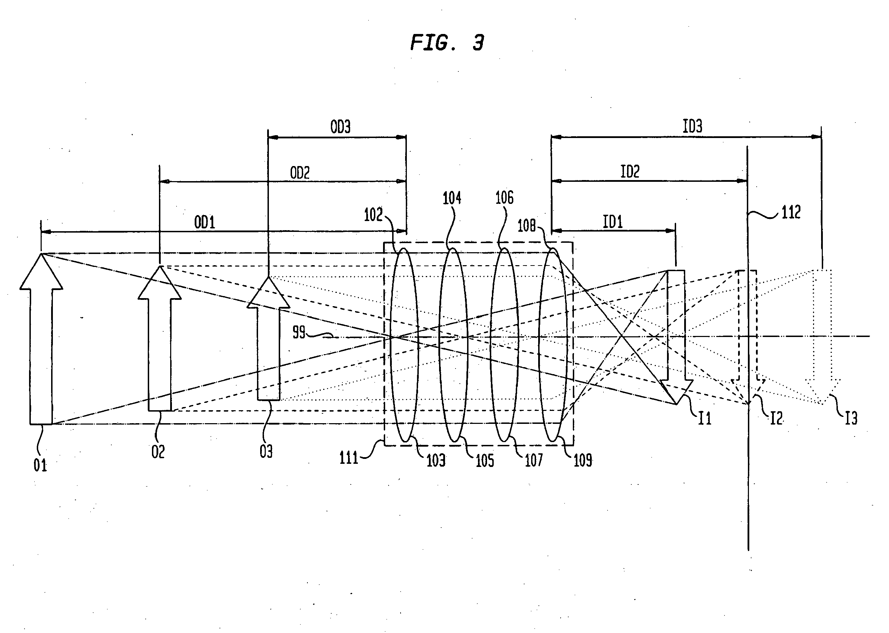

FIG. 3 illustrates the effect of the addition of a blurring function into the known optical system 111. Ordinarily, for a sharply-focused optical system 101 as in FIGS. 1 and 2, the object 02 located at object distance OD2 is focused onto the image surface 112. Object O1 which is located outside of the depth of field at object distance OD1, is located further than object O2 from the optical system. Thus, the focusing optical surface forms an image I1 at image distance ID1 in front of the imaging plane. Object 03, which is located outside of the depth of field at object distance OD3, is nearer than object 02 to the optical system. The imaging surface thus forms an image I3 at image distance ID3 which would theoretically appear behind the imaging plane 112.

The effect of the blurring in optical system 111 causes each of the images I1, I2, I3 to be stretched in its respective focal plane by varying the focal distance of the various rays emanating from each of the objects O1 02, 03. The paths taken by the various rays emanating from object 02, for example, are changed by the blurring function such that some rays are now focused in front of the imaging plane and some rays are now focused behind the imaging plane, rather than all the rays being focused at the imaging plane. Furthermore, the paths of the rays emanating from objects O1 and 03 are each similarly changed by the blurring optical surface so that some of the rays emanating from each of these objects are now focused at the imaging plane. Namely, the addition of the blurring surface widens the point spread function (PSF) of the optical system such that objects O1 O2, and 03 are each directed onto the imaging plane 112 as blurred images which, after the corresponding raw data is processed by the image processor, is restored to the images I1, I2, and I3 shown in FIG. 1.

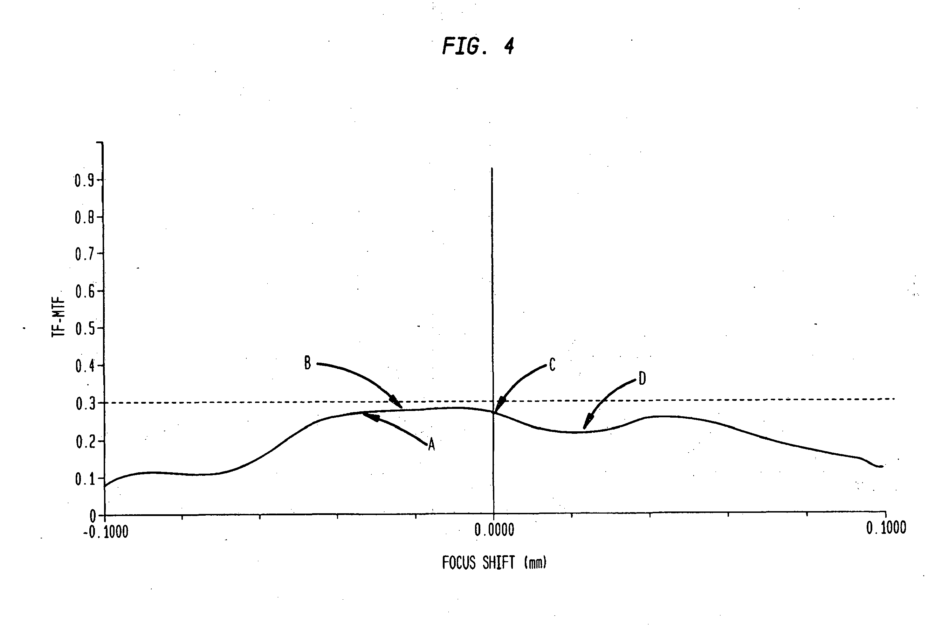

FIG. 4 illustrates a TF-MTF curve for the given wavelength of light for an on-axis image sensor when the blurring function is incorporated into the known optical system 111. The range of image distances at which the TF-MTF is above a minimum acceptable value (e.g., 0.1) increases, namely, the depth of focus of the optical system increases, so that the value of the TF-MTF is acceptable even at some object distances nearer than the selected object distance A. However, the value of the TF-MTF at object distances greater than the selected object distance B is less than that shown in FIG. 2 for the same range of object distances. As a result, the blurring optical surface reduces the sharpness of the images of objects located in the standard working zone, namely, the range of object distances shown in FIG. 2 where the TF-MTF is greater than 0.3.

To address the problem, embodiments disclosed herein provide an optical system which has a customized depth of field and which at least reduces the adverse effects present in the above-described known optical system.

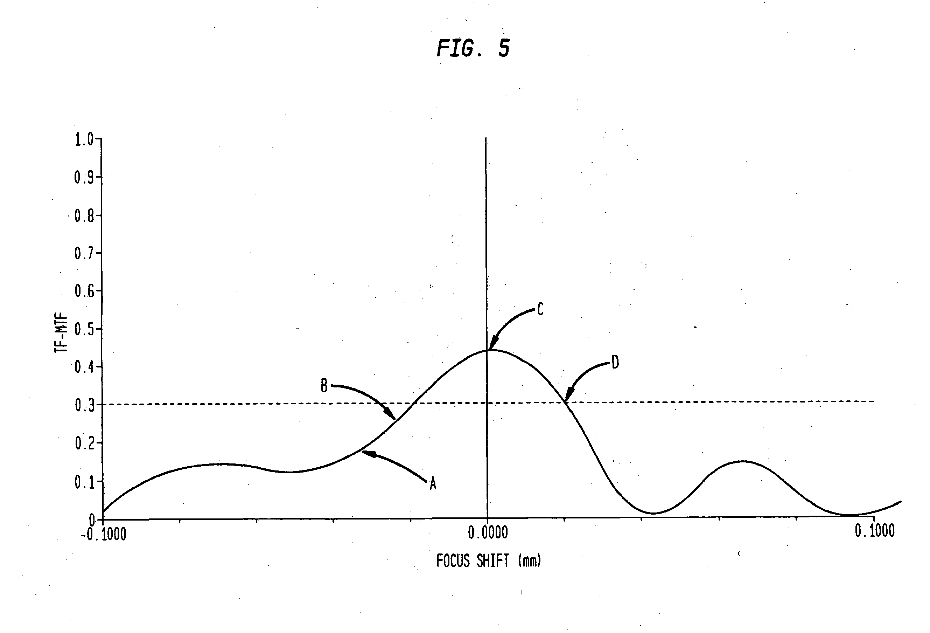

FIG. 5 illustrates an example of TF-MTF curve of an optical system in accordance with one embodiment and, particularly, for a given wavelength of light, for a given location in the field of view, such the center of the field of view, and for a given spatial frequency, such a spatial frequency of about one-half of the Nyquist frequency of the image sensor or about one-quarter of the Nyquist frequency of the image sensor. For object distances between the object distances B and D, the TF-MTF curve is similar in shape to that shown in FIG. 2 for the same range of object distances.

The value of the TF-MTF in this range of object distances is above threshold value 0.3 but is slightly less than that of FIG. 2 for the same region. Further, for object distances greater than the object distances D, the TF-MTF drops to near zero. Additionally, for object distances of between the object distances A and B, the TF-MTF only decreases to about 0.2. Moreover, for object distances less than the object distance A, the TF-MTF remains above 0.1 down to focus shifts of about -0.08 mm. The image sharpness of objects located nearer to the optical system is thus improved when compared to that produced by the TF-MTF curve shown in FIG. 2, and the image sharpness of objects located in the standard working zone is thus improved when compared to that of the curve shown in FIG. 4. As a result, the depth of field is customized to include distances nearer to the optical system without sacrificing sharpness in the standard working zone.

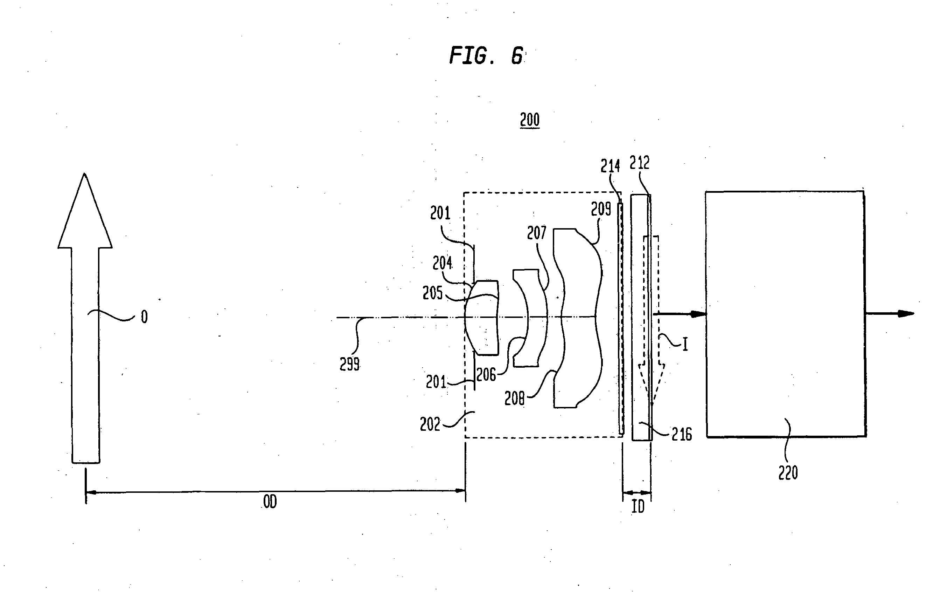

FIG. 6 illustrates a comparative example of an optical system 200 in which an optical system 202 includes an aperture 201 as well as up to six optical surfaces 204,...,209 that are designed to provide the TF-MTF curve shown in FIG. 5. The shapes of the optical elements 204,...,209 shown in FIG. 6 are only one example of an embodiment of an optical system in accordance with the invention. Other configuration of optical elements and apertures in accordance with the invention, including those which include some or all of the optical surfaces shown in FIG. 6, are also possible.

For the optical system 200 shown in FIG. 6, the optical design coefficients and the apertures of all optical surfaces along with the materials from which the lenses may be made are provided as follows in Tables 1 and 2:

TABLE 1

| # | Radius (mm) | Thick (mm) | Medium | Semi-Diameter | Conic | Note |
|---|---|---|---|---|---|---|
| 0 | Infinite | 1000.00 | Air | 660.04 | 0.00 | OBJ |
| 1 | Infinite | 0.10 | Air | 0.91 | 0.00 | |
| 2 | Infinite | 0.15 | Air | 0.84 | 0.00 | |
| 3 | Infinite | -0.15 | Air | 0.69 | 0.00 | APS |
| 4 | 1.24 | 0.64 | Plastic | 0.75 | 0.98 | L1 |
| 5 | 5.79 | 0.04 | Plastic | 0.68 | 21.47 | |
| 6 | Infinite | 0.57 | Air | 0.69 | 0.00 | APS |
| 7 | -2.61 | 0.40 | Plastic | 0.77 | 2.53 | L2 |
| 8 | -93.22 | 0.14 | Plastic | 0.98 | 0.00 | |
| 9 | Infinite | 0.18 | Air | 1.38 | 0.00 | |
| 10 | 1.24 | 0.70 | Plastic | 1.45 | -2.32 | L3 |
| 11 | 1.26 | 0.42 | Plastic | 1.80 | -0.88 | |
| 12 | Infinite | 0.15 | Glass D263T | 2.08 | 0.00 | IRF |
| 13 | Infinite | 0.20 | Air | 2.12 | 0.00 | |
| 14 | Infinite | 0.35 | Glass D263T | 2.20 | 0.00 | CG |
| 15 | Infinite | 0.04 | Air | 2.29 | 0.00 | |
| 16 | Infinite | 0.00 | Air | 2.31 | 0.00 | |
| 17 | Infinite | 0.00 | Air | 2.24 | 0.00 | IMG |

TABLE 2
(ZEMAX Asphere Coefficients & Types)

Surface 4          : EVENASPH L1
Coeff on r 2 :                      0
Coeff on r 4 :            -0.077216559
Coeff on r 6 :            -0.020297869
Coeff on r 8 :             -1.0413125
Coeff on r 10 :             4.2187441
Coeff on r 12 :            -10.590479
Coeff on r 14 :             13.77347

(continued)

(ZEMAX Asphere Coefficients & Types)

| | |
|---|---|
| Surface 4 | : EVENASPH L1 |
| Coeff on r 16 : | -7.9967838 |
| Surface 5 | : XASPHERE |
| Maximum term : | 10 |
| Maximum rad ap : | 1 |
| Term on P to 2: | 0 |
| Term on P to 4: | -0.1081705 |
| Term on P to 6: | 0.03408349 |
| Term on P to 8: | -0.20230368 |
| Term on P to 10: | -0.60575719 |
| Term on P to 12: | 4.4746014 |
| Term on P to 14: | -21.614628 |
| Term on P to 16: | 71.427647 |
| Term on P to 18: | -143.84937 |
| Term on P to 20: | 105.82278 |
| | |
| Surface 7 | : EVENASPH L2 |
| Coeff on r 2 : | 0 |
| Coeff on r 4 : | -0.53871222 |
| Coeff on r 6 : | 0.63968284 |
| Coeff on r 8 : | -1.3077832 |
| Coeff on r 10 : | 1.0157938 |
| Coeff on r 12 : | -0.67345776 |
| Coeff on r 14 : | -0.29809862 |
| Coeff on r 16 : | 1.2107708 |
| | |
| Surface 8 | : EVENASPH |
| Coeff on r 2 : | 0 |
| Coeff on r 4 : | -0.99253441 |
| Coeff on r 6 : | 2.4800494 |
| Coeff on r 8 : | -5.6417944 |
| Coeff on r 10 : | 10.202669 |
| Coeff on r 12 : | -12.827124 |
| Coeff on r 14 : | 10.025118 |
| Coeff on r 16 : | -3.3867771 |
| Surface 10 | : EVENASPH L3 |
| Coeff on r 2 : | 0 |
| Coeff on r 4 : | -0.83916165 |
| Coeff on r 6 : | 0.91697952 |
| Coeff on r 8 : | -0.80535528 |
| Coeff on r 10 : | 0.3857058 |
| Coeff on r 12 : | -0.0094644632 |
| Coeff on r 14 : | -0.051295144 |
| Coeff on r 16 : | 0.011531968 |
| | |
| Surface 11 | : EVENASPH |
| Coeff on r 2 : | 0 |
| Coeff on r 4 : | -0..46591383 |
| Coeff on r 6 : | 0.31665229 |
| Coeff on r 8 : | -0.15435987 |

(continued)

| Surface 11 | : EVENASPH |
| --- | --- |
| Coeff on r 10 : | 0.026034794 |
| Coeff on r 12 : | 0.0099374419 |
| Coeff on r 14 : | -0.0052750473 |
| Coeff on r 16 : | 0.00068366932 |

Here, surface 0 corresponds to the object, L1 corresponds to the first lens, including surfaces 204,205, L2 corresponds to the second lens, including surfaces 206,207, L3 corresponds to the third lens, including surfaces 208,209, APS corresponds to the aperture stop 201, IRF corresponds to an IR filter 214, CG corresponds to a sensor cover glass 216, and IMG corresponds to the detector image plane 212. Of course, other configurations realizing a customized depth of focus may be achieved.

Plastic used to create the lenses may be any appropriate plastic, e.g., polycarbonates, such as E48R produced by Zeon Chemical Company, acrylic, PMMA, OKP4 from Osaka Gas Chemicals Co., Ltd in Japan, etc. While all of the lens materials in Table 1 are indicated as plastic, other suitable materials, e.g., glasses, may be used. Additionally, each lens may be made of different materials in accordance with a desired performance thereof. The lenses may be made in accordance with any appropriate method for the selected material, e.g., injection molding, glass molding, replication, wafer level manufacturing, etc. Further, the IR filter 214 and cover glass 216 may be made of suitable IR filtering materials such as N-BK7 or D263T, available from SCHOTT North America, Inc. Elmsford, NY.

The imaging system 200 also includes an image sensor 210 having an image plane 212 that may function in a manner similar to that of the image sensor 110 of FIG. 1. An image processor 220 is also provided and processes the raw data received from the image sensor 210 by deconvolving the point spread function (PSF) associated with the optical system 202 to attain a processed image. Using the optical system designed in accordance with this aspect of the invention, acceptably sharp processed images are attained at object distances less than the object distance A without appreciatively sacrificing the sharpness of processed images located within the standard working zone.

To attain optical surfaces that provide the TF-MTF curve shown in FIG. 5, a three-stage design scheme may be employed. A fixed focal length optical system is used as a starting design and includes optical surfaces that provide a desired focal length using a preferred size and materials. Next, the design of the optical system is modified to customize the depth of field. Specifically, a distortion is introduced on the sag of the optical surface located closest to the lens stop aperture. As an example, the distortion may be both a function of a radial distance R from the optical axis and a function of an angle $\theta$ from the optical axis. Such a function may have the relation:

$$f(R, \theta) = a \times (R^4 - R^{16}),$$

or the relation:

$$f(R, \theta) = a \times R^2 \times \cos(\theta).$$

When the depth of field is customized in a manner that provides an extended depth of field (EDOF), the resulting optical system may have a TF-MTF curve similar to that shown in FIG. 4.

Thereafter, the optical surfaces are optimized according to predefined conditions so that the resulting optical system provides a TF-MTF curve as shown in FIG. 5. Imposed optimization conditions may include requiring the hyperfocal distance F to be located at the focal distance at which the TF-MTF curve has its maximum value. The optimization conditions may include requiring the TF-MTF curve to have respective predefined values at the selected object distances A, B and D. For example, the TF-MTF curve may be required to have respective predefined values when the selected object distance B is set at one-half of the hyperfocal distance, the selected object distance A at one-quarter of the hyperfocal distance, and/or the selected object distance D at an infinite object distance +∞. The imposition of such conditions may be carried out by assigning different weights. A zero forcing algorithm may also be used to ensure that the TF-MTF decreases to substantially zero at positive focus shifts greater than a predetermined amount, such as +0.03 mm. Alternatively, the conditions of optimization may include having highest possible TF-MTF values at each of the selected object distances A, B and D with the additional constraint that the TF-MTF approaches zero at positive focus shifts above +0.03 mm. A further constraint may include requiring the TF-MTF to have a value of a least 0.1 in a range of object distances closer than the selected object distance A. Standard optimization programs may be used here. For example, iterative procedures may be implemented in conventionally known optics design programs such as ZEMAX or Code V.

According to another embodiment, a digital imaging system includes a fixed focus optical system that provides the TF-MTF shown in FIG. 5 and which has two modes of operation, referred to as a "regular mode" and a "macro mode". For objects located at distances where the TF-MTF is above a threshold value, the imaging system operates in the regular mode in which the image processor operates in the standard manner described above. As an example, the regular mode may be used for objects located within a range of object distances at which the TF-MTF is above a predetermined value or at least 50% of the maximum TF-MTF value.

For objects located at distances for which the TF-MTF is below the threshold value, the macro mode is used in which the image processor boosts the TF-MTF of the image to increase its sharpness. As an example, the macro mode may be used in a range of focal shifts of between -20 $\mu$m to about -80 $\mu$m, i.e., between -0.02 to -0.08 mm. As FIG. 5 shows, the TF-MTF decreases in this range from about 0.25 at a focal shift of -20 $\mu$m to about 12 at a focal shift of -80 $\mu$m. In one implementation, these focus shifts may correspond to object distances of between 50 cm to 10 cm.

According to another embodiment, an optical system provides a TF-MTF similar to that shown in FIG. 5 but has a higher peak value. Because the area under the TF-MTF curve does not change with this modification, the resulting TF-MTF curve has a narrower peak around the maximum value so that the range of object distances in which the imaging system operates in the regular mode is reduced.

As a further alternative, a fixed focus optical system having a TF-MTF curve similar to that shown in FIG.. 5 is provided but with an aperture having a reduced F-number. Typically, the apertures of the fixed optical systems used to produce the curves shown in FIGS. 2, 3, and 5 have an F-number of 2.8. By reducing the F-number to 2.4, for example, or to as low as 1.75, the sensitivity of the resulting imaging system is increased though the width of the TF-MTF curve, i.e., the range of object distances at which the imaging system ordinarily operates, may decrease.

As a still further alternative, the depth, of field of the imaging system is customized to provide a reduced depth of field (RDOF). Namely, the width of the standard working range (i.e., the range of focus shifts in which the TF-MTF curve has a value of at least 0.3) is reduced when compared the curve shown in FIG. 5 so that the range of focus shifts in which the TF-MTF curve remains greater than 0.1 increases. The imaging system may also operate in the two modes described above. Thus, though the depth of field is reduced, the overall sensitivity of the imaging system is increased.

As an example, a video graphics array (VGA) camera may be used in which the optical system is modified to provide a TF-MTF curve similar to that shown in FIG. 5 but having a higher and narrower peak. Though a conventional VGA camera has a standard working zone of object distances between 15 cm to infinity, the modified VGA camera operates in the regular mode at object distances from 40 cm to infinity with greater sensitivity than the conventional VGA camera. Additionally, the modified VGA camera operates in the macro mode for object distances between 15 cm to 40 cm. The boost in the TF-MTF in the macro mode provides greater sensitivity at these object distances than that provided by the conventional VGA camera.

As another alternative, the F-number of the aperture of the modified VGA camera may also be reduced in the manner described above to further boost the sensitivity of the VGA camera. Such a VGA camera may operate in the regular mode at object distances between 50 cm to infinity and operate in the macro mode at object distances of between 30 cm to 50 cm.

As yet another alternative, one or more of the above modifications may be implemented using a wafer level camera. Such a wafer level camera may incorporate refractive and/or diffractive optical surfaces that are patterned and etched to provide the TF-MTF curve shown in FIG. 5 or one of the modifications thereof as described above.

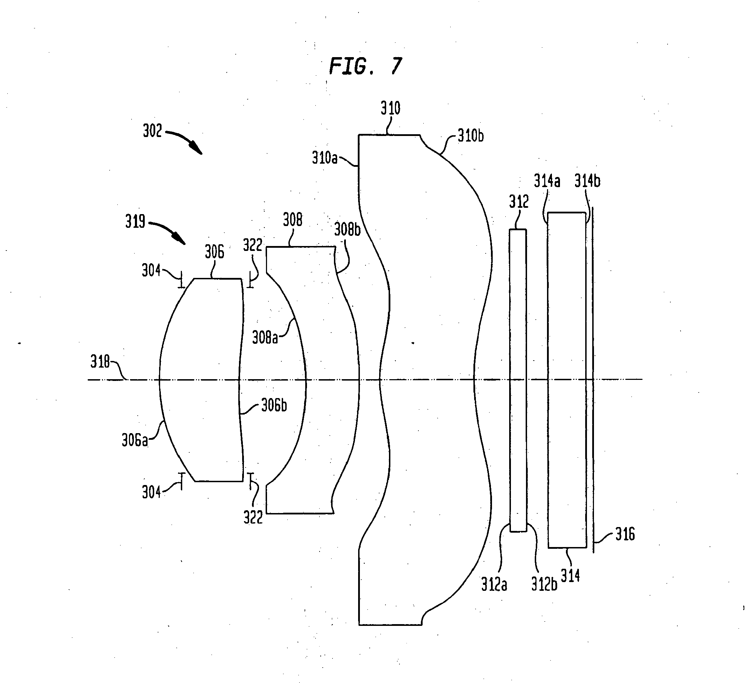

FIG. 7 is a cross section view of a comparative example of a lens system of the present invention. In this comparative example, the object side is placed on the left-hand side, and three lens components are placed in order along an optical axis. On the image side of the lens components, a cover glass is displayed over the image sensor. An aperture is placed in front of the first lens element on the object side.

Definitions of the terms "lens element" and "lens component" that relate to the following detailed description will now be given. The term "lens element" is herein defined as a single transparent mass of refractive material having two opposed refracting surfaces, which surfaces are positioned at least generally transversely of the optical axis of the imaging lens. The term "lens component" is herein defined as (a) a single lens element spaced so far from any adjacent lens element that the spacing cannot be neglected in computing the image forming properties of the lens elements or (b) two or more lens elements that have their adjacent lens surfaces either in full overall contact or overall so close together that the spacings between adjacent lens surfaces of the different lens elements are so small that the spacings can be neglected in computing the image forming properties of the two or more lens elements. Thus, some lens elements may also be lens components. Therefore, the terms "lens element" and "lens component" should not be taken as mutually exclusive terms. In fact, the terms may frequently be used to describe a single lens element in accordance with part (a) above of the definition of a "lens component."

In accordance with the definitions of "lens component" and "lens element" above, in the embodiments of the imaging lens system of the present invention described below, all lens elements may also be lens components. Thus, the present invention may variously be described in terms of lens elements or in terms of lens components.

In FIG. 7, an exemplary imaging device 302, here a camera, using the lens system of the present invention is displayed. Starting at the object side, arranged in order are first an aperture 304, lens element 306, lens element 308, lens element 310, an infrared filter 312, a cover glass 314 for the image sensor, and the image sensor 316. Aperture 304 and all three lens elements (306, 308, 310) are radially symmetric around an optical axis 318. Aperture 304 is placed on the object side of lens element 306. In this position, total track length of the lens system can be kept smaller as well as enabling a larger F/# and minimizing ray angles reaching the image surface at the sensor. The first lens element from the object side, lens element 306, is of positive refractive power. Lens element 306 carries much of the optical power of the lens system. Surface 306a, the surface of lens element 306 closest to the object side, is of convex shape over the entire surface. The second surface 306b of lens element 306 on the image side has a concave shape near the optical axis that becomes slightly convex near the periphery of the lens. The second lens element from the object side, lens element 308, is of negative refractive power and generally has a meniscus shape. Lens element 308 is primarily used to correct color and other aberrations. Surface 308a, the surface of lens element 308 closest to the object side, is of concave shape. The second surface 308b of lens element 308 on the image side has a convex shape. The third lens element from the object side, lens element 310, has portions of both negative and positive refractive power, where the region near the optical axis has slight positive power, and regions toward the periphery are of negative power. Lens element 310 primarily acts as a field corrector. Surface 310a, the surface of lens element 310 closest to the object side, comprises both convex and concave shapes, with a convex shape near the optical axis. The second surface 310b of lens element 310 on the image side also comprises both convex and concave shapes, with a concave shape near the optical axis. In one embodiment, the radii of curvature of the center of both surfaces on this lens element 310 are equal. Infrared filter surfaces 312a and 312b, as well as cover glass surfaces 314a and 314b are all substantially flat.

All six lens element surfaces described in the last paragraph are aspheres in shape, and may satisfy the following sag height equation, although other equations are commonly used in the art to describe the shape of aspherical lenses:

$$Z(Y) = \frac{CY^2}{1 + \sqrt{1 - (1 + K)C^2 Y^2}} + \sum_i (A_i * Y^i) \qquad \text{(Equation 1)}$$

where Z is the sag height (in mm) of a line drawn from a point on the aspheric lens surface at a radial distance, Y from the optical axis to the tangential plane of the aspheric surface vertex, C is the curvature of the aspheric lens surface near the optical axis, Y is the radial distance (in mm) from the optical axis, K is the conic constant, and $A_i$ is the $i^{th}$ aspheric coefficient.

In this particular comparative example, each of lens elements 306, 308, and 310 are made of plastic material, although it is contemplated that optical glass may be used instead for one or more elements. Here, lens elements 306, 308, and 310 are made of plastic. In one embodiment, lens elements 306 and 310 are made of the same material having a refractive index of about 1.53 and an Abbe number of about 55.5 whereas lens 308 is made of a different material having a refractive index of about 1.63 and an Abbe number (dispersion characteristic) of about 23.3. These materials provide proper compensation for the lens design, although other various commercially available materials of similar refractive index and Abbe number could be used in this design. In addition, the infrared filter 312 and sensor cover glass 314 have functional uses, but are not strictly needed for equivalent optical behavior of the imaging device given proper focus positioning of the image plane, and thus it is envisioned that one or both could be removed in a different embodiment.

Table 3 lists data about the various surfaces of the imaging system shown in FIG. 7, and lists in order from the object side, the surface, radius of curvature of the surface, the distance along the optical axis 318 to the next surface, and the material used starting at that surface if one exists (specified by the index of refraction, $n_d$ and the Abbe number $v_d$. In addition, other values of the system as a whole, such as the focal length, the F/#, the field of view angle, the TTL, and the total track length-to-image size or height or circle ratio (hereafter, TTL/image height ratio) are displayed. Note that although the distance between the aperture 304 and the first lens element surface 306a is negative, the aperture is nevertheless placed on the object side of lens element 306. The curvature of surface 306a is sufficiently high that the portion of surface 306a nearest the optical axis protrudes through the aperture.

TABLE 3

| Lens Data for embodiment in FIG. 7, F/#: 2.4, f = 3.4 mm, FOV 33.4°, TTL 3.93 mm, TTL/image circle 0.88 | | | | |
|---|---|---|---|---|
| Surface # | ROC (mm) | Distance (mm) | $n_d$ | $v_d$ |
| 1 (aperture) | | -0.146 | | |
| 2 (surface 306a) | 1.24 | 0.64 | 1.53 | 55.5 |

(continued)

| Lens Data for embodiment in FIG. 7, F/#: 2.4, f = 3.4 mm, FOV 33.4°, TTL 3.93 mm, TTL/image circle 0.88 | | | | |
|---|---|---|---|---|
| Surface # | ROC (mm) | Distance (mm) | $n_d$ | $v_d$ |
| 3 (surface 306b) | 5.79 | 0.04 | | |
| 4 (aperture) | | 0.57 | | |
| 5 (surface 308a) | -2.61 | 0.40 | 1.63 | 23.3 |
| 6 (surface 308b) | -93.14 | 0.32 | | |
| 7 (surface 310a) | 1.25 | 0.70 | 1.53 | 55.5 |
| 8 (surface 310b) | 1.25 | 0.42 | | |
| 9 (IR filter) | | 0.15 | 1.52 | 55 |
| 10 | | 0.20 | | |
| 11 (sensor cover) | | 0.35 | 1.52 | 55 |
| 12 | | 0.037 | | |

Also note the (TTL/image size) ratio listed in Table 3. The image size is calculated from the chosen field of view. This particular design was optimized to image an image sensor with a rectangular array with a diagonal size of 4.48mm (i.e., a 3 megapixel sensor including a pixel size of 1.75 $\mu$m). The same lens design may be used with a sensor having fewer pixels (e.g., 2 megapixels), and a similar 1.75 $\mu$m or slightly larger pixel pitch and achieve similar or improved performance. The image size must be as large as this so that all pixels are illuminated, but should not be much larger than this as this could cause poor contrast and a lower field of view of the camera. As is known to those with skill in the art, the (TTL/image size) ratio is normally greater than one; it is very challenging to go below this value without introducing unacceptable aberrations in the resultant image. (TTL/image size) < 0.90 is considered very aggressive. In this comparative example, the (TTL/image size) = 0.88. As the image sensor sizes continue to shrink in a lateral direction, achieving a small (TTL/image size) ratio will enable an imaging device that is extremely thin along the optical axis.

Plastic used to create the lenses may be any appropriate plastic, e.g., polycarbonates, such as E48R produced by Zeon Chemical Company, OKP4 obtainable from the Osaka Gas Chemicals Co., Ltd in Japan, acrylic, PMMA, etc. While all of the lens materials in Table 3 are indicated as plastic, other suitable materials, e.g., glasses, may be used. Additionally, each lens may be made of different materials in accordance with a desired performance thereof. The lenses may be made in accordance with any appropriate method for the selected material, e.g., injection molding, glass molding, replication, wafer level manufacturing, etc.

Table 4 lists aspheric coefficients for each aspheric surface according to Equation 1. Most commonly, the odd terms $A_i$ = 0 when i is odd for an even aspherical surfaces, but in the case of surfaces 307 and 308 this is not the case. In addition, for the lens system, the following condition is also satisfied: $f_1/f < 0.8$, where $f_1$ is the focal length of the first lens element 6, and f is the focal length of the entire lens system. The lens system of this embodiment fulfills this condition as $f_1/f \approx 0.65$. This corresponds to a relatively high amount of optical power in the first lens element of the system. This is helpful to keep the TTL of the lens system small.

TABLE 4

| Aspheric coefficients for the comparative example in FIG. 7 (ZEMAX Asphere Coefficients & Types) | | | | |
|---|---|---|---|---|
| Surface # | Type of surface | Conic constant k | Nonzero A coefficients | Coefficient value |
| 2 | Even Asphere | 0.9818 | 4 | -0.07722 |
| | | | 6 | -0.0203 |
| | | | 8 | -1.04131 |
| | | | 10 | 4.218744 |
| | | | 12 | -10.5905 |
| | | | 14 | 13.77347 |
| | | | 16 | -7.99678 |

(continued)

| Aspheric coefficients for the comparative example in FIG. 7 (ZEMAX Asphere Coefficients & Types) | | | | |
|---|---|---|---|---|
| Surface # | Type of surface | Conic constant k | Nonzero A coefficients | Coefficient value |
| 3 | Extended Asphere | 21.472 | 4 | -0.10817 |
| | | | 6 | 0.034083 |
| | | | 8 | -0.2023 |
| | | | 10 | -0.60576 |
| | | | 12 | 4.474601 |
| | | | 14 | -21.6146 |
| | | | 16 | 71.42765 |
| | | | 18 | -143.849 |
| | | | 20 | 105.8228 |
| 5 | Even Asphere | 2.5345 | 4 | -0.53871 |
| | | | 6 | 0.639683 |
| | | | 8 | -1.30778 |
| | | | 10 | 1.015794 |
| | | | 12 | -0.67346 |
| | | | 14 | -0.2981 |
| | | | 16 | 1.210771 |
| 6 | Even Asphere | 0 | 4 | -0.99253 |
| | | | 6 | 2.480049 |
| | | | 8 | -5.64179 |
| | | | 10 | 10.20267 |
| | | | 12 | -12.8271 |
| | | | 14 | 10.02512 |
| | | | 16 | -3.38678 |
| 7 | Extended Odd Asphere | -17.4004 | 1 | 8.09E-05 |
| | | | 3 | 0.004204 |
| | | | 4 | 0.417742 |
| | | | 5 | -2.49695 |
| | | | 6 | 2.615258 |
| | | | 7 | 0.165419 |
| | | | 8 | -1.20632 |
| | | | 9 | -0.32996 |
| | | | 10 | 0.40109 |
| | | | 11 | 0.437224 |
| | | | 12 | -0.04409 |
| | | | 13 | -0.27571 |
| | | | 14 | 0.0622 |
| | | | 15 | 0.017418 |

(continued)

| Surface # | Type of surface | Conic constant k | Nonzero A coefficients | Coefficient value |
|---|---|---|---|---|
| 8 | Extended Odd Asphere | -3.8004 | 1 | -0.00037 |
| | | | 3 | -0.01668 |
| | | | 4 | -0.24207 |
| | | | 5 | -0..06962 |
| | | | 6 | 0.254207 |
| | | | 7 | -0.02531 |
| | | | 8 | -0.07795 |
| | | | 9 | 0.007845 |
| | | | 10 | -0.01063 |
| | | | 11 | 0.000617 |
| | | | 12 | 0.017008 |
| | | | 13 | -0.00448 |
| | | | 14 | 0.000828 |
| | | | 15 | -0.00024 |
| | | | 16 | -0.00228 |
| | | | 17 | 0.000519 |
| | | | 18 | 0.000687 |
| | | | 19 | -0.00028 |
| | | | 20 | 2.63E-05 |

The term "coupled aperture." will now be defined. In most all lens systems, the light passing through the system is controlled by a single aperture that limits the size of the bundle of rays that reach the image from any given point on the object. For well-corrected lens systems, the aperture thus limits the field of view of the lens by delineating the maximum angles of light allowable through the system. Aperture 304 in FIG. 7 contributes to this function. Because of the extremely compact and aggressively aspheric correction of the lens elements in FIG. 7, rays of light at higher field angles are less well-corrected and may have a larger point spread function toward the periphery than do rays with smaller field angles. The second aperture 322 after the first lens 306 contributes substantially to acting as a stop for the system as a whole, and thus impacts the F/# of the lens along with the first aperture. Thus, the first element 304 and second element 322 of the coupled aperture 319 each contribute to the stop function for the lens system 302.

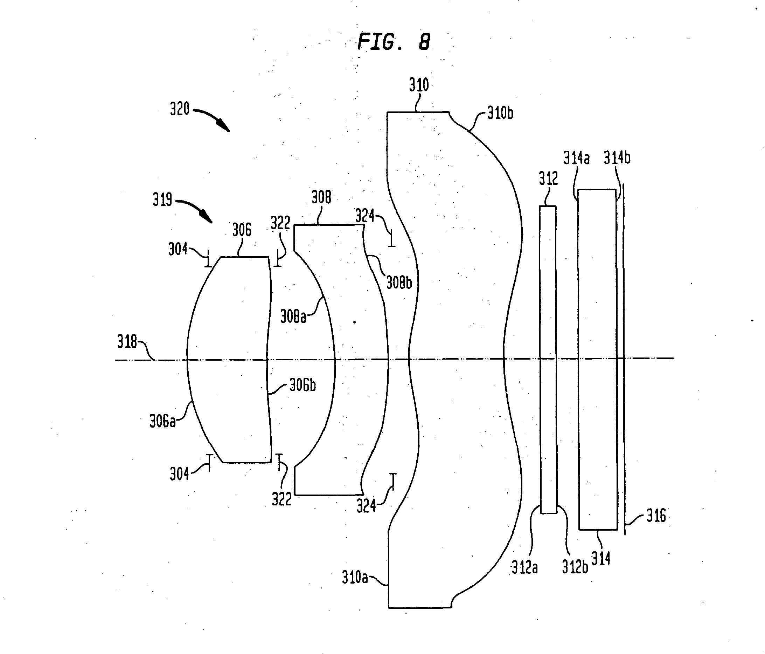

FIG. 8 is a cross sectional view of an alternative comparative example. FIG. 8 displays an imaging device 320. The lens elements and their positioning in this comparative example are similar to those of the comparative example shown in FIG. 7. The main differences are the addition of a third aperture that is also radially symmetric about optical axis 318. This aperture 324 acts as a secondary aperture and is placed near the object side of the third lens element 310. Relative position of the lens elements with respect to each other and the image sensor has not changed in imaging device 320 as compared to imaging device 302, but in this embodiment the position of the third aperture is 0.14 mm after the image side of surface 308.

Although the third aperture 324 does block some of the light that would otherwise impinge on the image sensor, the amount of light passing through the system as a whole is only reduced marginally. Since the relative and overall illumination are only reduced slightly and the field of view is unchanged in the imaging device of FIG. 8 as compared to that of FIG. 7, this aperture cannot be defined as an aperture stop of the system. Nevertheless, there is an improvement in the quality of the image with the presence of the secondary aperture. Stray light running through the system will be reduced that might adversely affect the contrast of the image. These and other effects can be ameliorated by the inclusion of secondary apertures without significantly reducing the illumination.

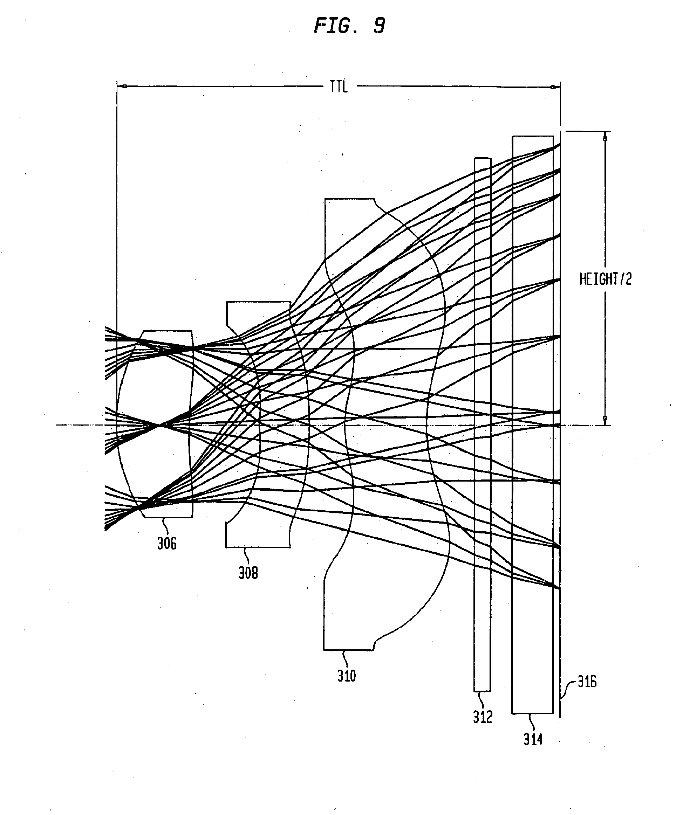

FIG. 9 shows a simplified version of a cross-section of either the comparative examplesdescribed above, additionally adding exemplary rays to show the imaging characteristics of the lens system. Also shown is the TTL and the image circle size.

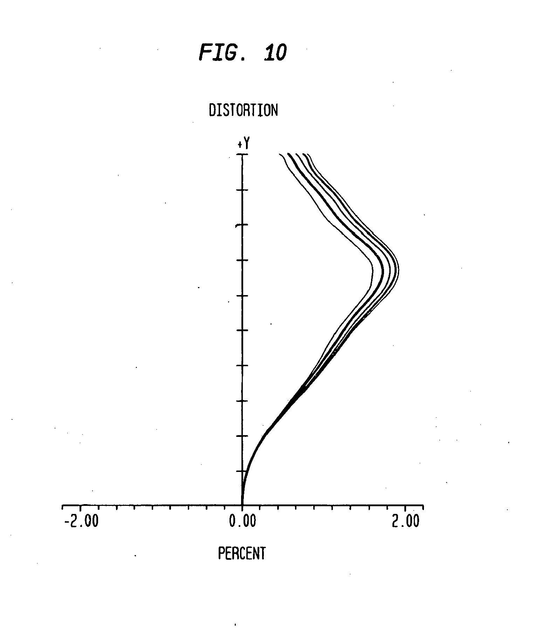

FIG. 10 shows the distortion values at several wavelengths of the lens system of FIG. 8. As can be seen by one with skill in the art, even though the lens system is extremely compact, aberrations have been well compensated for.

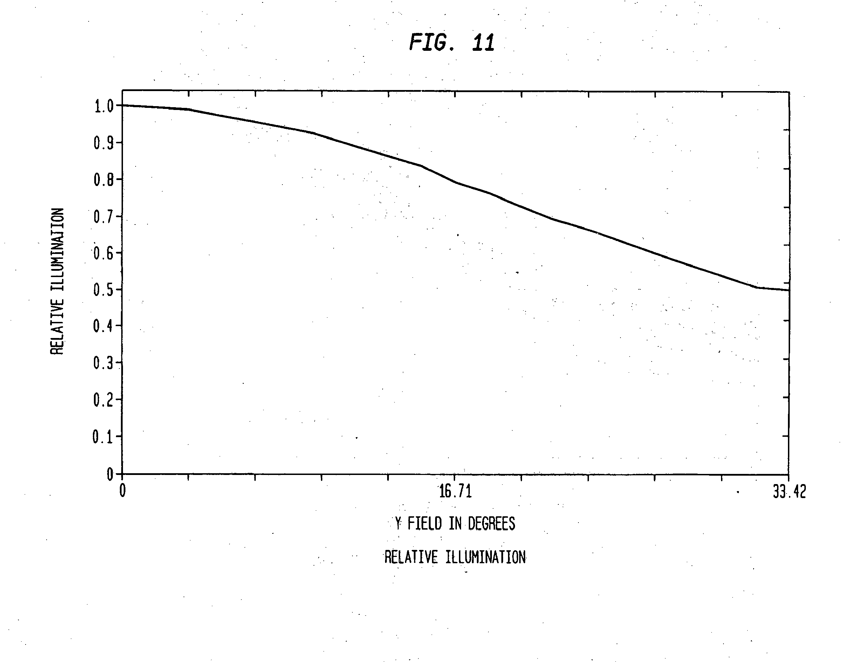

FIG. 11 shows the relative illumination of light hitting the image sensor as a function of the Y height for the image device 2 of FIG. 7. A drop-off in the illumination toward the periphery of an image is normal for any lens system, and the curve shown here is typical of many similar camera modules. The relative illumination for the image device 20 of FIG. 8 is nearly identical to that of image device 2 and is not shown, however this further corroborates that a secondary aperture in the embodiment in FIG. 8 has only a small effect on light flux through the system.

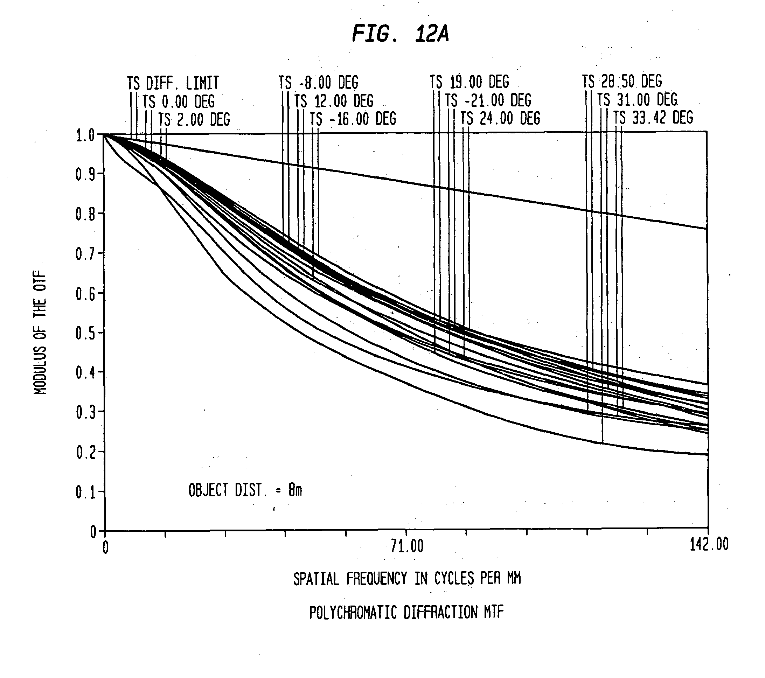

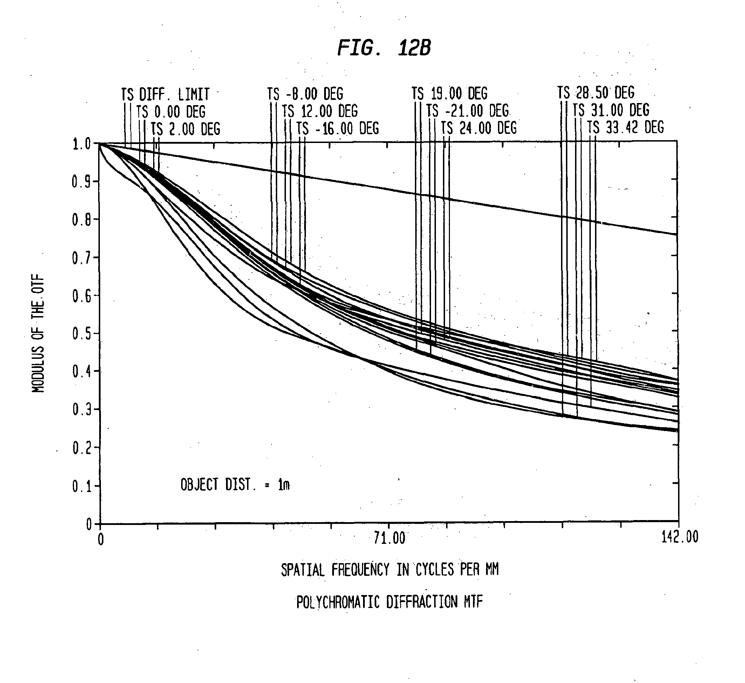

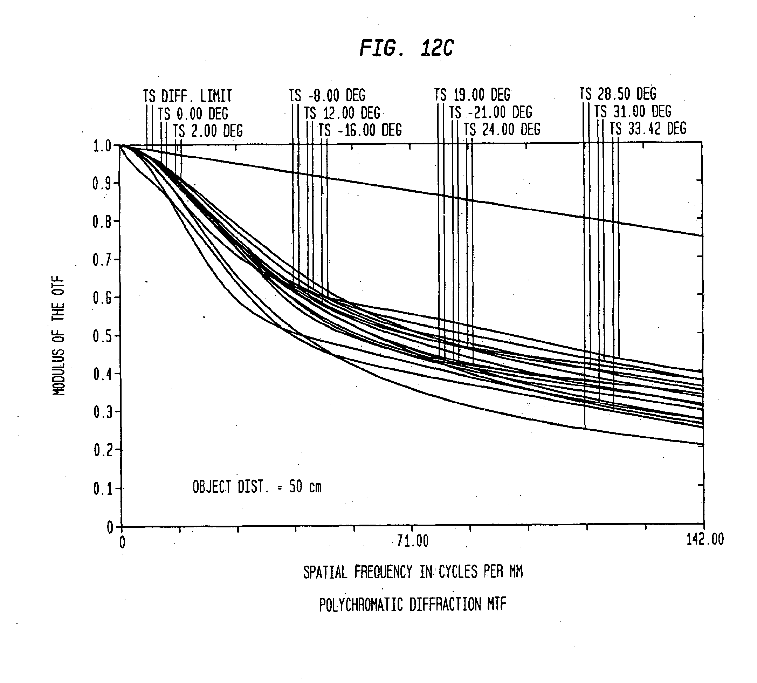

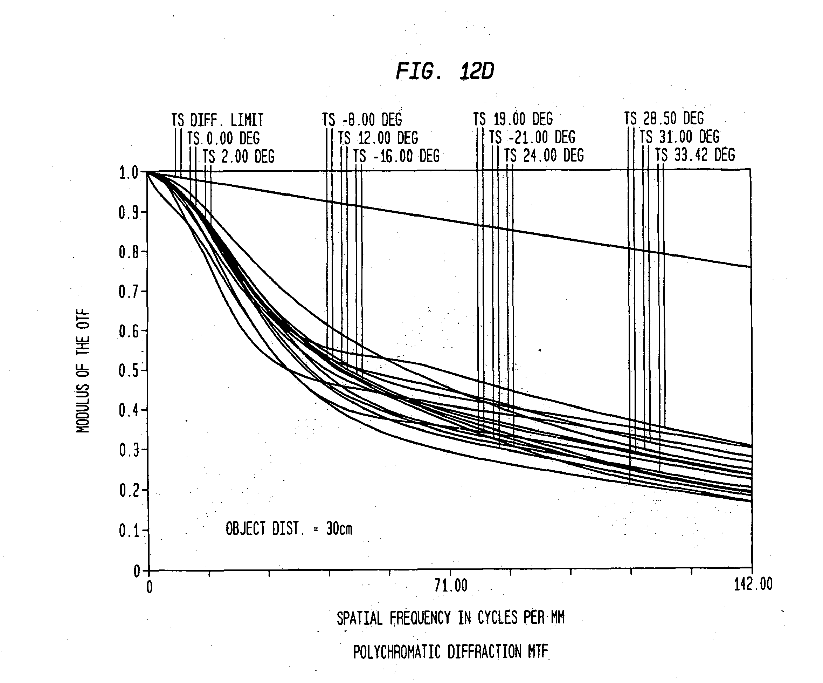

As discussed above, a common metric used to measure spatial resolution of lenses is the MTF (modulation transfer function), that roughly quantifies the resolvable contrast of a lens system at various spatial frequencies. MTF is often measured or calculated at different light wavelengths, object distances, and field angles. FIGS. 12A-D plot the polychromatic MTF of the comparative example of the lens system shown in FIG. 8 with object distances of 8 m, 1 m, 0.5 m, and 0.3 m, respectively. In each graph, each line represents the MTF from an object at the requisite distance at different field angles. At each object distance, the MTF at a given field angle tends to drop from a maximum at 1.0 (resolving at full contrast at a given spatial frequency) to lower values, indicating a general loss of ability to resolve finer and finger details, that is details with higher spatial frequency components. An MTF with shallower slopes will correspond to an image that seems more "in focus" compared to an image that has MTF values that drop off more steeply.

The MTF curves shown in FIGS. 12A-D are polychromatic MTF plots. By this it is meant that the MTF values several different wavelengths of light are calculated independently for the system and are then added together with a weighting factor and normalized so that the polychromatic MTF is still equal to one when the spatial frequency is equal to zero. The wavelengths used to calculate FIGS. 12A-D and their corresponding weighting factors are listed in Table 5. Although nearly any combination of wavelengths and weighting factors could be used, it is common practice to choose a set of wavelengths that adequately span the desired image sensor range and have weighting factors that corresponds well to either the sensor wavelength response or possibly the wavelength response of the human eye. For example, in one comparative example, the weights in Table 5 may be made equal. In another comparative example, fewer wavelengths at about 486, 588, and 656nm may be given roughly equal weights to approximate a response in the visible spectrum. Other combinations apparent to one skilled in the art may be used.

TABLE 5

| Wavelength and weights used to calculate polychromatic MTFs | |
| --- | --- |
| Wavelength (nm) | Weight |
| 470 | 0.1 |
| 510 | 0.5 |
| 555 | 1.0 |
| 610 | 0.5 |
| 650 | 0.1 |

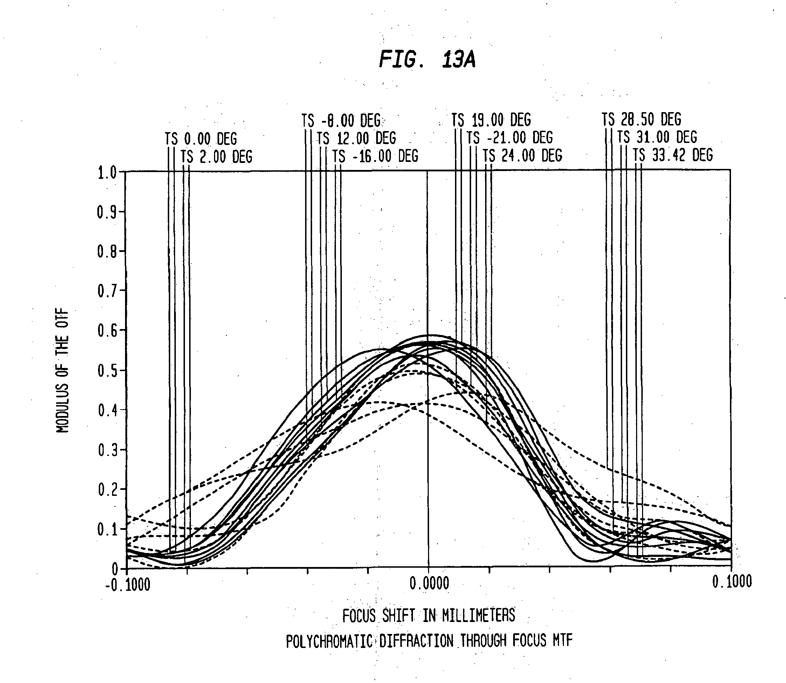

This form of MTF data, while useful, does not always give intuitively obvious results in evaluating the quality of the lens system. Often MTF data is plotted in the form of a through-focus MTF graph. Instead of showing MTF vs. spatial frequency, MTF is plotted vs. the image distance with wavelength and spatial frequency fixed for a given curve. Image distance is defined as the distance away from the image plane of the system, and can be calculated from the object distance through the lens system. An exemplary through-focus MTF graph can be seen in FIG.13A. This is a polychromatic MTF with the same wavelengths and weighting factors of Table 5. Image distance on the plot at z = 0 is normally chosen to correspond to the image focal plane where the object is at the hyperfocal distance; image distances to the right of the vertical axis correspond to objects farther from the lens than this distance and image distances to the left of the vertical axis correspond to closer objects.

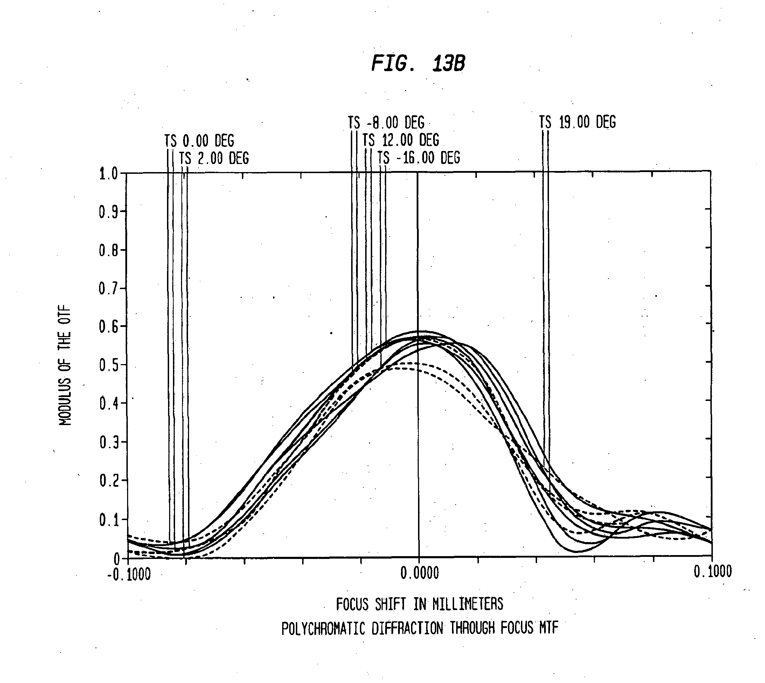

FIGS. 13A and 13B are plotted for a number of different field angles for both tangential and sagittal rays at 71 cycles/mm spatial frequency. This frequency has been chosen to match the Nyquist/4 frequency (N/4) of one possible image sensor that could be used at the image plane, although the exact type of image sensor is not crucial to the present invention. For example, the lens design depicted in the current comparative example may be used with sensor having a pixel pitch of about 1.75 $\mu$m. The TF-MTF plot may be asymmetric about the vertical axis. When this plot is wide, especially to the left of the vertical axis indicating objects closer to the lens system than the hyperfocal distance, it indicates that the resolving power of the lens is better over a wider range of object distances, or in other words, the lens has a high depth of field.

The lens set embodiments disclosed herein and variants thereof may incorporate extended or customized depth of field technologies, such as those disclosed in commonly assigned pending U.S. Patent Applications Nos. 61/001,988, filed November 6, 2007, and 61/002,262, filed November 7, 2007. To that end, the lens architectures may produce a slightly blurry image with some longitudinal aberrations (including both diffractive and chromatic) that may be corrected using subsequent image processing, such as that disclosed in commonly assigned pending U.S. Patent Application No. 11/970427, filed January 7 2008.

FIG. 13B plots the same data as seen in FIG. 13A, but with higher field angles having been removed for clarity.

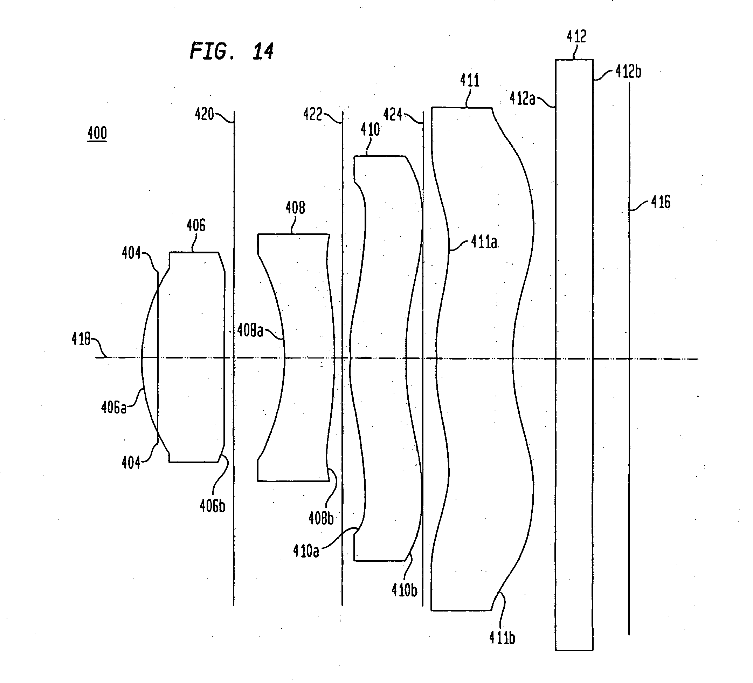

FIG. 14 is a cross sectional view of an embodiment of a lens system of the present invention. In this embodiment, the lens system may be used with a 5 megapixel image sensor preferably having a 1.4 μm pixel size. A representative image sensor of this type may include 2592 horizontal pixels, a 3.6288 mm horizontal sensor width, 1944 vertical pixels, a 2.7216 mm vertical sensor width, and a 4.536 mm sensor diagonal or image circle. Alternatively, the lens system may be used with a 3 megapixel image sensor preferably having a 1.75 μm pixel size. A representative image sensor of this type may include 2048 horizontal pixels, a 3.584 mm horizontal sensor width, 1536 vertical pixels, a 2.688 mm vertical sensor width, and a 4.48 mm sensor diagonal or image circle. Thus, an image circle produced by the lens system should be at least as large as the sensor diagonal to minimize illumination and distortion defects.

In FIG. 14, an exemplary imaging device 400, here a camera, using the lens system of the present embodiment is displayed. Here, the object side is placed on the left-hand side, and four lens components are placed in order along an optical axis. On the image side of the lens components, a cover glass is disposed (not shown) over the image sensor. An aperture stop is placed in front of the first lens element on the object side. Starting at the object side, arranged in order are a first aperture 404, lens element 406, aperture 420, lens element 408, aperture 422, lens element 410, aperture 424, lens element 411, an infrared filter 412, and image sensor 416. All four apertures (404, 420, 422, and 424) and all four lens elements (406, 408, 410, 411) are radially symmetric around an optical axis 418. The function of the latter three apertures 420, 422, 424 may be provided by a barrel (not shown) in which the lens elements 406, 408, 410, 411 are held.

The first lens element from the object side, lens element 406, is of positive refractive power. Lens element 406 carries much of the optical power of the lens system. Surface 406a, the surface of lens element 406 closest to the object side, is of convex shape over the entire surface. The second surface 406b of lens element 406 on the image side has a concave shape near the optical axis that becomes slightly convex near the periphery of the lens. The second lens element from the object side, lens element 408, is of negative refractive power and generally has a meniscus shape. Lens element 408 is primarily used to correct color and other aberrations. Surface 408a, the surface of lens element 408 closest to the object side, is of concave shape. The second surface 408b of lens element 408 on the image side has a convex shape.

The third lens element from the object side, lens element 410, has portions of both negative and positive refractive power, where the region near the optical axis has slight positive power, and regions toward the periphery are of negative power. Lens element 410 primarily acts as a field corrector. Surface 410a, the surface of lens element 410 closest to the object side, comprises both convex and concave shapes, with a convex shape near the optical axis. The second surface 410b of lens element 410 on the image side also comprises both convex and concave shapes, with a concave shape near the optical axis. In one embodiment, the radii of curvature of the center of both surfaces on this lens element 410 are similar. For example, Table 6 below shows that the radii of curvature near the optical axis of both sides 410a, 410b of lens element 410 are within about 20% of each other.

The fourth lens element from the object side, lens element 411, has portions of both negative and positive refractive power, where the region near the optical axis has slight positive power, and regions toward the periphery are of negative power. Lens element 411 primarily acts as a further field corrector. Surface 411a, the surface of lens element 411 closest to the object side, comprises both convex and concave shapes, with a convex shape near the optical axis. The second surface 411b of lens element 411 on the image side also comprises both convex and concave shapes, with a concave shape near the optical axis. In one embodiment, the radii of curvature of the center of both surfaces on this lens element 411 are also similar. For example, Table 6 below shows that the radii of curvature near the optical axis of both sides 411a, 411b of lens element 411 are within about 20% of each other. Infrared filter surfaces 412a and 412b, as well as the cover glass surfaces (not shown), are all substantially flat.

In this particular embodiment, each of lens elements 406, 408, 410, and 411 are made of plastic material, although it is contemplated that optical glass may be used instead for one or more elements. Here, lens elements 406, 408, 410, and 411 are made of plastic. In one embodiment, lens elements 406, 410 and 411 are made of the same materia which is preferably plastic having a refractive index of about 1.53 and an Abbe number of about 55.6, whereas lens 408 is made of a different material which is preferably plastic having a refractive index of about 1.63 and an Abbe number of about 23.3. Materials described above may provide suitable refractive index and dispersion values. In another embodiment, a material F52R from Zeon Chemical Company may be appropriate for this design. These materials provide proper compensation for the lens design, although other commercially available materials of similar refractive index and Abbe number could be used in their place. In addition, the infrared filter 412 and sensor cover glass (not shown) have functional uses, but are not strictly needed for equivalent optical behavior of the imaging device given proper focus positioning of the image plane, and thus it is envisioned that one or both could be removed in a different embodiment. Different sensor packages and different camera modules may use discrete IR filters and cover glass elements, while others may combine these elements by, for example, applying an IR filter coating to one or more other surfaces (e.g., lenses or cover glass). With the design and material choices provided, the total track length of the lens system can be kept smaller as well as enabling a lower F/# and minimizing ray angles reaching the image surface at the sensor.

For the optical system 400 shown in FIG. 14, the optical design coefficients and the apertures of all optical surfaces along with the materials from which the lenses may be made are provided as follows in Tables 6 and 7:

TABLE 6

| Lens Data for embodiment in FIG. 14: F/#: 2.4, f = 3.36 mm, FOV = 33.9 Deg., TTL = 4.025 mm, TTL/image circle = 0.89 | | | | | | |
|---|---|---|---|---|---|---|
| Lens # | Radius (mm) | Thick (mm) | Medium | Semi-Diameter | Conic | Note |
| 0 | Infinite | Infinite | | 0 | 0 | OBJ |
| 1 | Infinite | 0 | | 1.662069 | 0 | |
| 2 | Infinite | 0.125 | | 1.662069 | 0 | |
| 3 | Infinite | -0.125 | | 1.37 | 0 | Stop 1 |
| 4 (406a) | 1.410365 | 0.6707743 | Plastic | 1.54 | -0.08 | L1-1 |
| 5 (406b) | 15.55622 | 0.07738125 | | 1.7 | 0 | L1-2 |
| 6 | Infinite | 0.41407 | | 4 | 0 | Stop 2 |
| 7 (408a) | 1.875045 | 0.4233227 | Plastic | 1.64 | -25.2414 | L2-1 |
| 8 (408b) | 6.470526 | 0.07738125 | | 1.98 | -19.474 | L2-2 |
| 9 | Infinite | 0.05977482 | | 4 | 0 | Stop 3 |
| 10 (410a) | 1.635336 | 0.4570566 | Plastic | 2.82 | -7.1045 | L3-1 |
| 11 (410b) | 1.90848 | 0.1547625 | | 3.26 | -6.4244 | L3-2 |
| 12 | Infinite | 0.1081142 | | 4 | 0 | Stop 4 |
| 13 (411a) | 1.41692 | 0.6237836 | Plastic | 3.62 | -9.343433 | L4-1 |
| 14 (411b) | 1.216869 | 0.3604103 | | 4.04 | -6.333731 | L4-2 |
| 15 | Infinite | 0.3 | 1.523100, 55.000000 | 4.96 | 0 | ir cut-off (D263T) |
| 16 | Infinite | 0.298194 | | 4.96 | 0 | |
| 17 | Infinite | | | 4.573771 | 0 | |

TABLE 7

Aspheric coefficients for the embodiment in FIG. 14 (ZEMAX Asphere Coefficients & Types)

| Surface 4: | EVENASPH L1-1 |
|---|---|
| Coefficient on r 2: | 0 |
| Coefficient on r 4: | 0.01755412 |
| Coefficient on r 6: | -0.24990765 |
| Coefficient on r 8: | 0.99962099 |
| Coefficient on r 10: | -2.5706254 |
| Coefficient on r 12: | 3.5064561 |
| Coefficient on r 14: | -2.3184946 |
| Coefficient on r 16: | 0.50750775 |
| Surface 5 : | EVENASPH L1-2 |
| Coefficient on r 2: | 0 |
| Coefficient on r 4: | -0.078320524 |
| Coefficient on r 6: | 0.18223338 |
| Coefficient on r 8: | -0.77782966 |
| Coefficient on r 10: | 1.2698117 |

(continued)

|  | Surface 5 : | EVENASPH L1-2 |  |
| --- | --- | --- | --- |
| Coefficient on r 12: |  |  | -1.1783685 |
| Coefficient on r 14: |  |  | -0.19092332 |
| Coefficient on r 16: |  |  | 0.65412311 |

|  | Surface 7: | EVENASPH L2-1 |  |
| --- | --- | --- | --- |
| Coefficient on r 2: |  |  | 0 |
| Coefficient on r 4: |  |  | -0.55451917 |
| Coefficient on r 6: |  |  | 1.4797853 |
| Coefficient on r 8: |  |  | -3.1235602 |
| Coefficient on r 10: |  |  | 5.0556751 |
| Coefficient on r 12: |  |  | -5.6282698 |
| Coefficient on r 14: |  |  | 3.4231714 |
| Coefficient on r 16: |  |  | -1.3329401 |

|  | Surface 8: | EVENASPH L2-2 |  |
| --- | --- | --- | --- |
| Coefficient on r 2: |  |  | 0 |
| Coefficient on r 4: |  |  | -0.37624954 |
| Coefficient on r 6: |  |  | 0.95364156 |
| Coefficient on r 8: |  |  | -1.2916818 |
| Coefficient on r 10: |  |  | 1.5377875 |
| Coefficient on r 12: |  |  | -1.1298586 |
| Coefficient on r 14: |  |  | 0.420005 |
| Coefficient on r 16: |  |  | -0.069094566 |

|  | Surface 10: | EVENASPH L3-1 |  |
| --- | --- | --- | --- |
| Coefficient on r 2: |  |  | 0 |
| Coefficient on r 4: |  |  | -0.20199958 |
| Coefficient on r 6: |  |  | 0.21364158 |
| Coefficient on r 8: |  |  | -0.14237208 |
| Coefficient on r 10: |  |  | 0.032064585 |
| Coefficient on r 12: |  |  | 0.0089063259 |
| Coefficient on r 14: |  |  | -0.0042681554 |
| Coefficient on r 16: |  |  | 0 |

|  | Surface 11: | EVENASPH L3-2 |  |
| --- | --- | --- | --- |
| Coefficient on r 2: |  |  | 0 |
| Coefficient on r 4: |  |  | -0.10822594 |
| Coefficient on r 6: |  |  | 0.05480811 |
| Coefficient on r 8: |  |  | -0.020184125 |
| Coefficient on r 10: |  |  | -3.9165013e-005 |
| Coefficient on r 12: |  |  | 0.0015155828 |
| Coefficient on r 14: |  |  | -0.0002490459 |
| Coefficient on r 16: |  |  | 0 |

|  | Surface 13: | EVENASPH L4-1 |  |
| --- | --- | --- | --- |
| Coefficient on r 2: |  |  | 0 |
| Coefficient on r 4: |  |  | -0.21062481 |
| Coefficient on r 6: |  |  | 0.113695 |
| Coefficient on r 8: |  |  | -0.049980847 |
| Coefficient on r 10: |  |  | 0.01758975 |
| Coefficient on r 12: |  |  | -0.0033762331 |

(continued)

| Surface 13: | EVENASPH L4-1 | |
|---|---|---|
| Coefficient on r 14: | | 0.00026797659 |
| Coefficient on r 16: | | -2.8232233e-006 |
| Surface 14: | EVENASPH L4-2 | |
| Coefficient on r 2: | | 0 |
| Coefficient on r 4: | | -0.12818825 |
| Coefficient on r 6: | | 0.048556555 |
| Coefficient on r 8: | | -0.011869546 |
| Coefficient on r 10: | | -0.0015486492 |
| Coefficient on r 12: | | 0.0016135421 |
| Coefficient on r 14: | | -0.00033617145 |
| Coefficient on r 16: | | 2.4819813e-005 |

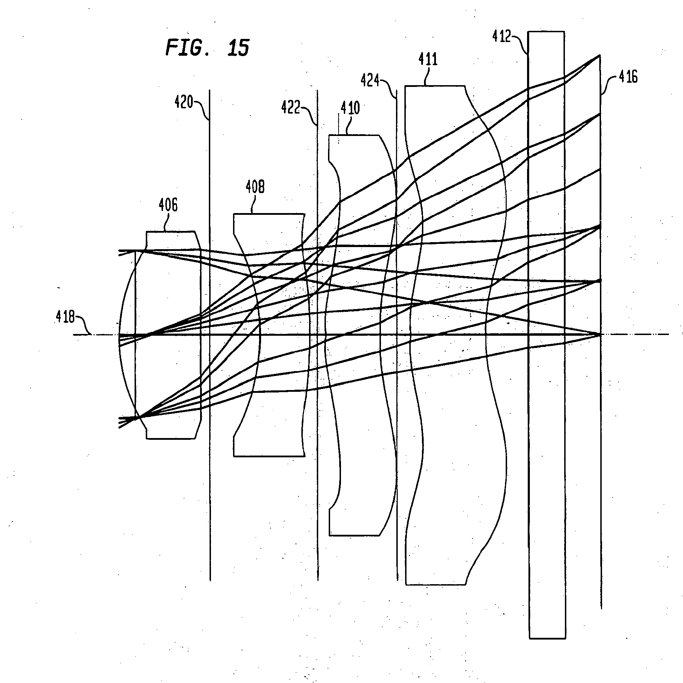

FIG 15 shows a simplified version of a cross-section of the embodiment of FIG. 14, additionally adding exemplary rays to show the imaging characteristics of the lens system of FIG. 14.

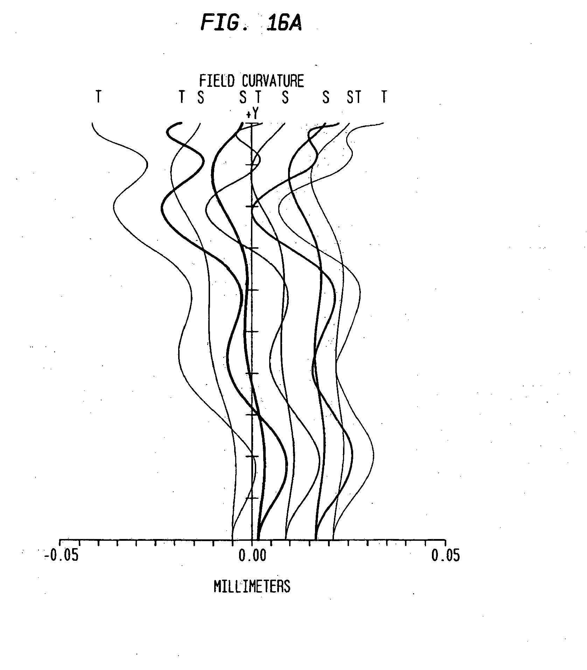

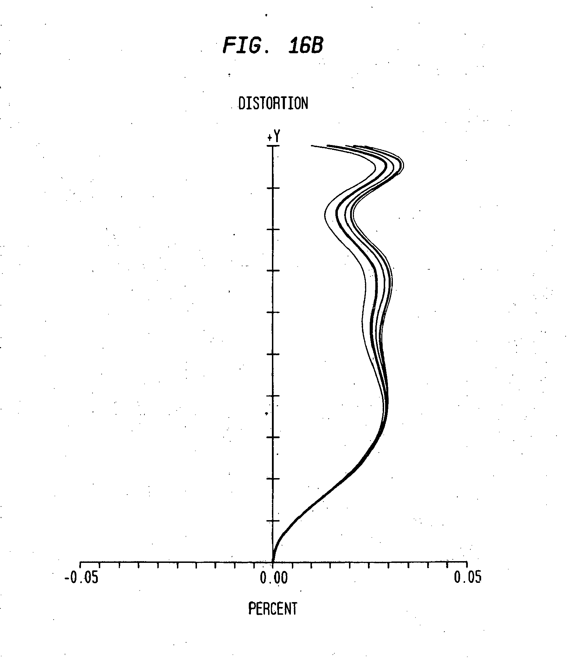

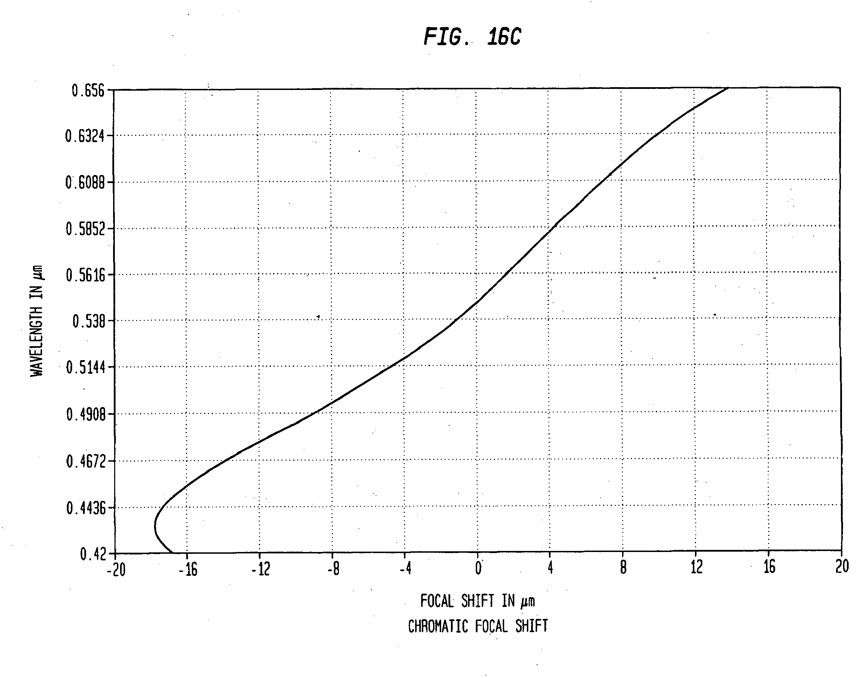

FIG. 16A shows the field curvature and FIG. 16B shows the distortion values at several wavelengths of the lens system of FIG. 14. As can be seen by one with skill in the art, even though the lens system is extremely compact, aberrations have been well compensated for. Another performance advantage achieved by the present embodiment is improved color aberration performance. As discussed above, improved depth of field performance may be achieved through post-processing of image sensor data. Such processing may be more effective if chromatic focal shift is controlled as shown in FIG. 16C. The chromatic focal shift is limited to below 35 $\mu$m across the visible spectrum. A conventional lens design that uses plastic lenses typically exhibits chromatic focal shift in excess of 60 $\mu$m. As such, the aberrations (including both diffractive and chromatic) may be corrected using subsequent image processing, such as that disclosed in commonly assigned pending U.S. Patent Application No. 11/970427, filed January 7 2008.

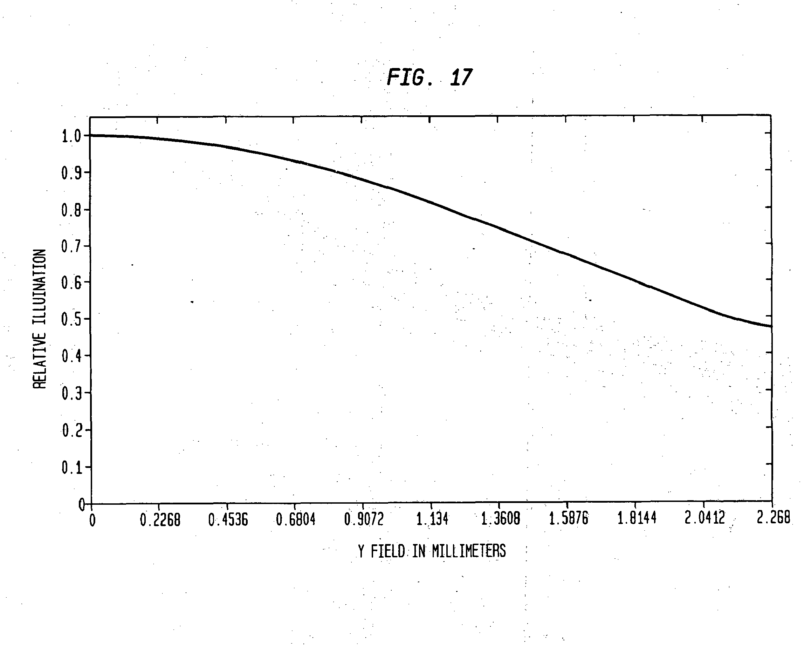

FIG. 17 shows the relative illumination of light hitting the image sensor as a function of the Y height for the image device of FIG. 14. The curve shown here is similar to that shown in FIG. 11 for the image device of FIG. 7 and is also typical of similar compact camera modules.

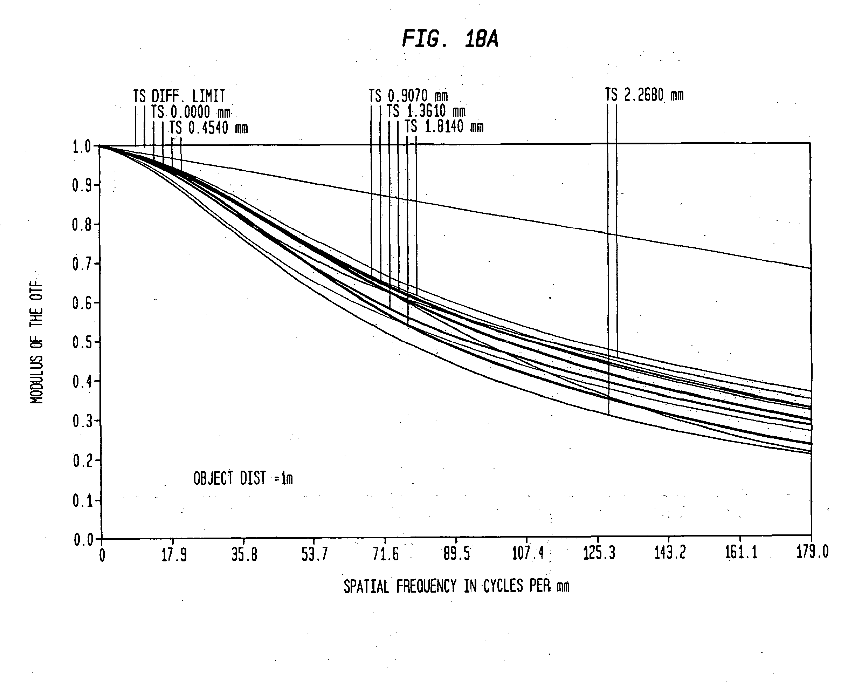

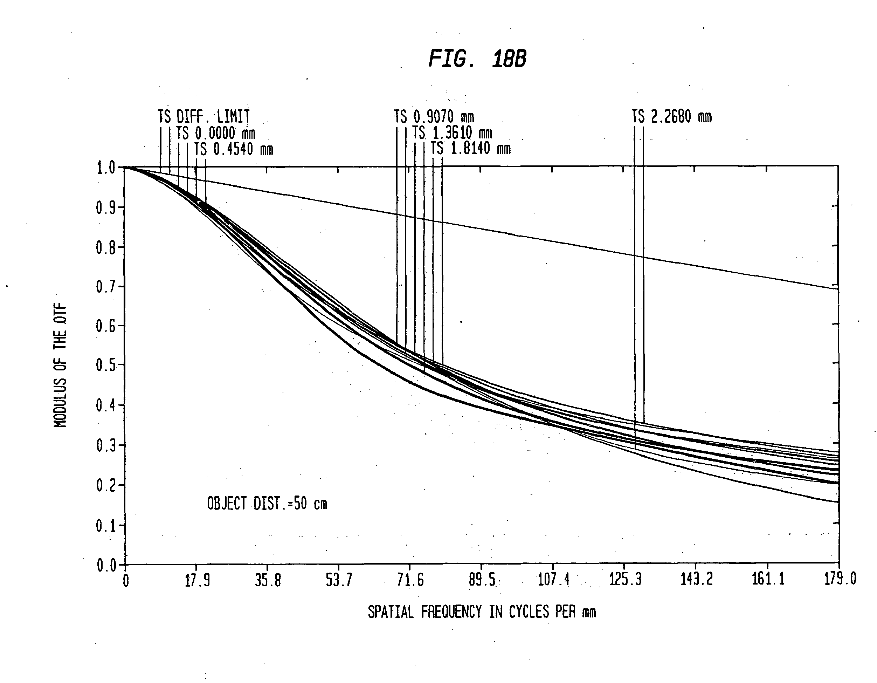

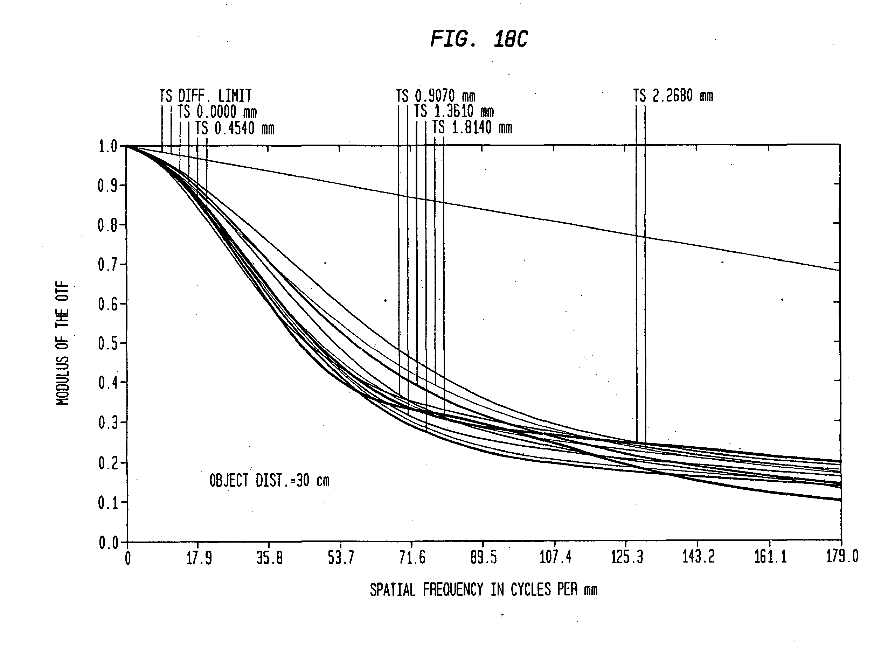

FIGS. 18A-C plot the polychromatic MTF performance of the embodiment of the lens system shown in FIG. 14 with object distances of 1 m, 0.5 m, and 0.3 m, respectively. In each graph, each line represents the MTF from an object at the requisite distance at different field angles. The wavelengths used to calculate FIGS. 18A-C and their corresponding weighting factors are listed above in Table 5. The horizontal axis in each of the plots of FIGS. 18A-C depict spatial frequency up to about Nyquist/4 (or about 179 cycles/mm for a 1.4 $\mu$m image sensor pixel size).

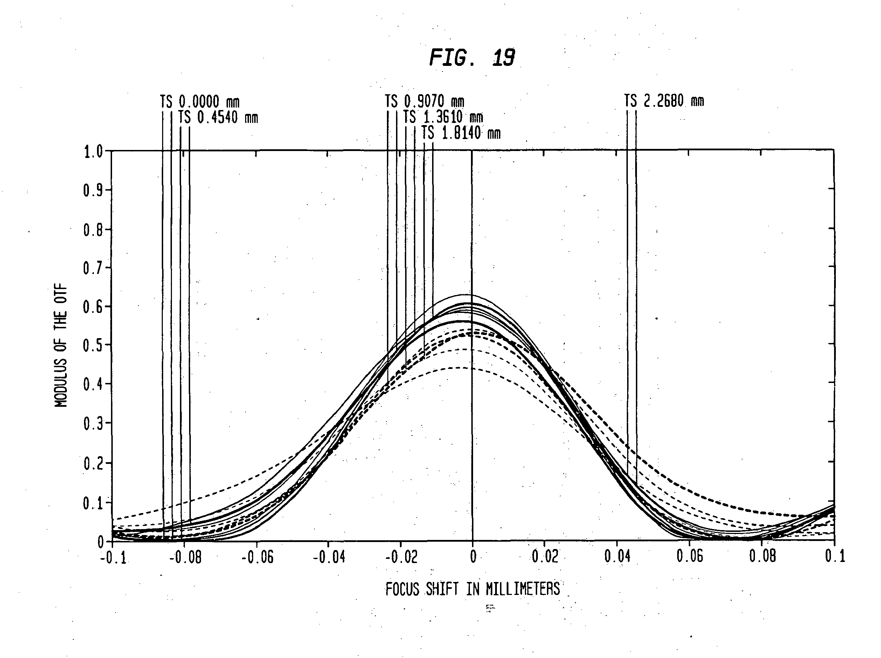

FIG. 19 shows a through-focus MTF graph for the lens system shown in FIG. 14 as plotted for a number of different field angles for both tangential and sagittal rays at Nyquist/2, or about 89 cycles/mm spatial frequency. Notably, this TF-MTF plot illustrates the same asymmetric nature described above. That is, despite a curvature peak at 0 mm focus shift, the area under the MTF curves on the left side of 0 mm is greater than the area under the MTF curves on the right side of 0 mm. To illustrate this, the MTF curves at a focus shift of about -0.04 mm are between about 0.2 and 0.3. By comparison, the MTF curves at a focus shift of about +0.04 mm are substantially below about 0.2.

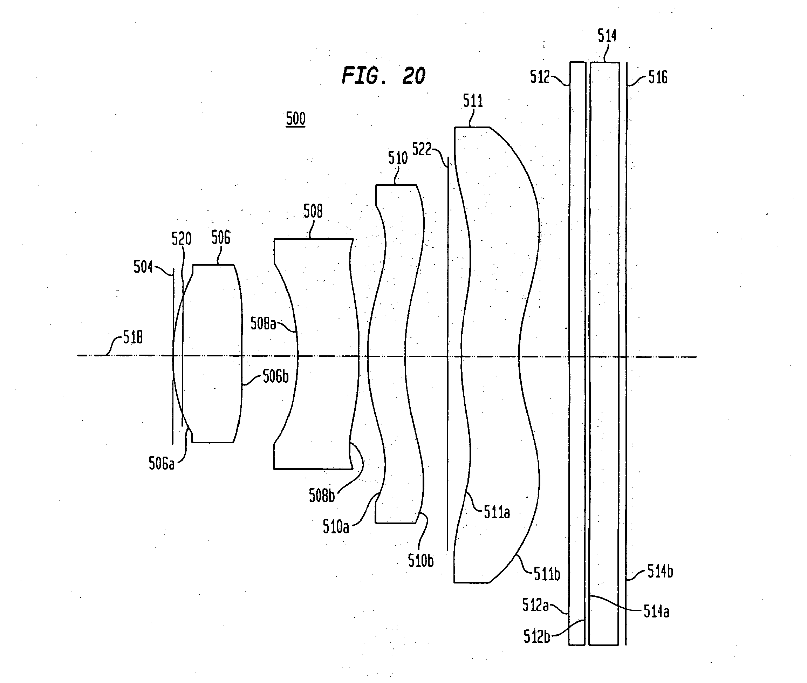

FIG. 20 is a cross sectional view of an embodiment of a lens system of the present invention. In this embodiment, the lens system may be used with a 5 megapixel image sensor preferably having a 1.75 $\mu$m pixel size. A representative image sensor of this type may include 2592 horizontal pixels, a 4.536 mm horizontal sensor width, 1944 vertical pixels, a 3.402 mm vertical sensor width, and a 5.67 mm sensor diagonal. Thus, an image circle produced by the lens system should be at least as large as the sensor diagonal to minimize illumination and distortion defects.

In FIG. 20, the object side is placed on the left-hand side, and four lens components are placed in order along an optical axis. On the image side of the lens components, a IR filter and a cover glass are disposed over the image sensor. An aperture is placed in front of the first lens element on the object side.

An exemplary imaging device 500, here a camera, using the lens system of the present embodiment is displayed. Starting at the object side, arranged in order are apertures (e.g., a baffle or sun shield) 504 and stop 520, lens element 506, lens element 508, lens element 510, aperture 522, lens element 511, infrared filter 512, cover glass 514 for the an image sensor, and the image sensor 516. The three apertures (504, 520, and 522) and all four lens elements (506, 508, 510, 511) are radially symmetric around an optical axis 518.

The first lens element from the object side, lens element 506, is of positive refractive power. Lens element 506 carries much of the optical power of the lens system. Surface 506a, the surface of lens element 506 closest to the object side, is of convex shape over the entire surface. The second surface 506b of lens element 506 on the image side has a slightly convex shape near the optical axis that becomes slightly more convex near the periphery of the lens. The second lens element from the object side, lens element 508, is of negative refractive power and generally has a meniscus shape. Lens element 508 is primarily used to correct color and other aberrations. Surface 508a, the surface of lens element 508 closest to the object side, is of concave shape. The second surface 508b of lens element 508 on the image side has a convex shape.

The third lens element from the object side, lens element 510, has portions of both negative and positive refractive power, where the region near the optical axis has slight positive power, and regions toward the periphery are of negative power. Lens element 510 primarily acts as a field corrector. Surface 510a, the surface of lens element 510 closest to the object side, comprises both convex and concave shapes, with a convex shape near the optical axis. The second surface 510b of lens element 510 on the image side also comprises both convex and concave shapes, with a concave shape near the optical axis. In one embodiment, the radii of curvature of the center of both surfaces on this lens element 510 are similar. For example, Table 8 below shows that the radii of curvature near the optical axis of both sides 510a, 510b of lens element 510 are within about 26% of each other.

The fourth lens element from the object side, lens element 511, has portions of both negative and positive refractive power, where the region near the optical axis has slight positive power, and regions toward the periphery are of negative power. Lens element 511 primarily acts as a further field corrector. Surface 511a, the surface of lens element 511 closest to the object side, comprises both convex and concave shapes, with a convex shape near the optical axis. The second surface 511b of lens element 511 on the image side also comprises both convex and concave shapes, with a concave shape near the optical axis. In one embodiment, the radii of curvature of the center of both surfaces on this lens element 511 are similar. For example, Table 8 below shows that the radii of curvature near the optical axis of both sides 511a, 511b of lens element 511 are within about 38% of each other. Infrared filter surfaces 512a and 512b, as well as cover glass surfaces 514a and 514b are all substantially flat.

In this particular embodiment, each of lens elements 506, 508, 510, and 511 are made of plastic material, although it is contemplated that optical glass may be used instead for one or more elements. Here, lens elements 506, 508, 510, and 511 are made of plastic. In one embodiment, lens elements 506, 510 and 511 are made of the same materia which is preferably a plastic having a refractive index of about 1.53 and an Abbe number of about 55.5, whereas lens 508 is made of a different material which is preferably plastic having a refractive index of about 1.63 and an Abbe number of about 23.3. Materials described above may provide suitable refractive index and dispersion values. These materials provide proper compensation for the lens design, although other commercially available materials of similar refractive index and Abbe number could be used in their placethis design. In addition, the infrared filter 512 and sensor cover glass 514 have functional uses, but are not strictly needed for equivalent optical behavior of the imaging device given proper focus positioning of the image plane, and thus it is envisioned that one or both could be removed or combined with other elements in a different embodiment. Apertures 504 and 520 are placed on the object side of lens element 506, and aperture 522 is located after the third lens 510. With the design and material choices provided, total track length of the lens system can be kept smaller as well as enabling a smaller F/# and minimizing ray angles reaching the image surface at the sensor.

For the optical system 500 shown in FIG. 20, the optical design coefficients and the apertures of all optical surfaces along with the materials from which the lenses may be made are provided as follows in Tables 8 and 9:

TABLE 8

| Lens Data for embodiment in FIG. 20: F/# = 2.7, f= 4.36 mm, FOV = 33.5 Deg., TTL = 5.1366 mm, TTL/image circle = 0.91 | | | | | | |
|---|---|---|---|---|---|---|
| Lens # | Radius (mm) | Thick (mm) | Medium | Semi-Diameter | Conic | Note |
| 0 | Infinite | 1500 | | 1969.116 | 0 | OBJ |
| 1 | Infinite | 0.11 | | 1.896273 | 0 | |
| 2 | Infinite | -0.11 | | 1.612 | 0 | Stop 1 |
| 3 | 1.89187 | 0.763406 | Plastic | 1.8 | -0.07640975 | L1-1 |
| 4 | -88.83 | 0 | | 2 | 0 | L1-2 |
| 5 | Infinite | 0.1 | | 2.056091 | 0 | |
| 6 | Infinite | 0.549002 | | 2.07178 | 0 | |
| 7 | -2.071874 | 0.683349 | Plastic | 2.07 | -25.7 | L2-1 |
| 8 | -6.714082 | 0 | | 2.57 | -20 | L2-2 |

(continued)

| Lens # | Radius (mm) | Thick (mm) | Medium | Semi-Diameter | Conic | Note |
|---|---|---|---|---|---|---|
| | Lens Data for embodiment in FIG. 20: F/# = 2.7, f= 4.36 mm, FOV = 33.5 Deg., TTL = 5.1366 mm, TTL/image circle = 0.91 |
| 9 | Infinite | 0.1024514 | | 2.725516 | 0 | |
| 10 | 1.462789 | 0.412143 | Plastic | 3.3 | -7.748 | L3-1 |
| 11 | 1.8417 | 0 | | 3.72 | -6.577 | L3-2 |
| 12 | Infinite | 0.5017889 | | 3.456727 | 0 | |
| 13 | Infinite | 0.15 | | 4.331235 | 0 | Stop 3 |
| 14 | 1.833724 | 0.651681 | Plastic | 4.46 | -13.265 | L4-1 |
| 15 | 1.327083 | 0 | | 5 | -7.683 | L4-2 |
| 16 | Infinite | 0.19 | | 5.122535 | 0 | |
| 17 | Infinite | 0.394779 | | 5.246697 | 0 | |
| 18 | Infinite | 0.15 | 1.523100, 55.000000 | 6.4 | 0 | ir cut-off (D263T) |
| 19 | Infinite | 0.05 | | 6.4 | 0 | |
| 20 | Infinite | 0.35 | | 6.4 | 0 | cover glass |
| 21 | Infinite | 0.088 | | 6.4 | 0 | |
| 22 | Infinite | | | 6.4 | 0 | IMA |

TABLE 9

Aspheric coefficients for the embodiment in FIG. 20 (ZEMAX Asphere Coefficients & Types)

| Surface 3: | EVENASPH L1-1 | |
|---|---|---|
| Coefficient on r 2: | | 0 |
| Coefficient on r 4: | | 0.010445285 |
| Coefficient on r 6: | | -0.1435908 |
| Coefficient on r 8: | | 0.36278309 |
| Coefficient on r 10: | | -0.55813965 |
| Coefficient on r 12: | | 0.45480889 |
| Coefficient on r 14: | | -0.19866811 |
| Coefficient on r 16: | | 0.036915479 |

| Surface 4: | EVENASPH L1-2 | |
|---|---|---|
| Coefficient on r 2: | | 0 |
| Coefficient on r 4: | | -0.05111637 |
| Coefficient on r 6: | | 0.041323066 |
| Coefficient on r 8: | | -0.11734093 |
| Coefficient on r 10: | | 0.18904142 |
| Coefficient on r 12: | | -0.2754392 |
| Coefficient on r 14: | | 0.15807234 |
| Coefficient on r 16: | | -0.024527543 |

| Surface 7: | EVENASPH L2-1 | |
|---|---|---|
| Coefficient on r 2: | | 0 |
| Coefficient on r 4: | | -0.29745896 |

(continued)

| | | |
|---|---|---|
| Surface 7: | EVENASPH L2-1 | |
| Coefficient on r 6: | | 0.53822314 |
| Coefficient on r 8: | | -0.74952401 |
| Coefficient on r 10: | | 0.84067501 |
| Coefficient on r 12: | | -0.66314443 |
| Coefficient on r 14: | | 0.2779385 |
| Coefficient on r 16: | | -0.055118742 |
| Surface 8: | EVENASPH L2-2 | |
| Coefficient on r 2: | | 0 |
| Coefficient on r 4: | | -0.20573231 |
| Coefficient on r 6: | | 0.34703455 |
| Coefficient on r 8: | | -0.33074522 |
| Coefficient on r 10: | | 0.26132926 |
| Coefficient on r 12: | | -0.12625039 |
| Coefficient on r 14: | | 0.030530952 |
| Coefficient on r 16: | | -0.002890261 |
| | | |
| Surface 10: | EVENASPH L3-1 | |
| Coefficient on r 2: | | 0 |
| Coefficient on r 4: | | -0.07859972 |
| Coefficient on r 6: | | 0.046457397 |
| Coefficient on r 8: | | -0.022572101 |
| Coefficient on r 10: | | 0.0032960793 |
| Coefficient on r 12: | | 0.00072565275 |
| Coefficient on r 14: | | -0.00024427788 |
| Coefficient on r 16: | | 0 |
| | | |
| Surface 11: | EVENASPH L3-2 | |
| Coefficient on r 2: | | 0 |
| Coefficient on r 4: | | -0.042578797 |
| Coefficient on r 6: | | 0.011946277 |
| Coefficient on r 8: | | -0.0038147491 |
| Coefficient on r 10: | | 9.1645611e-005 |
| Coefficient on r 12: | | 6.8872014e-005 |
| Coefficient on r 14: | | 1.1819371e-006 |
| Coefficient on r 16: | | 0 |
| Surface 14: | EVENASPH L4-1 | |
| Coefficient on r 2: | | 0 |
| Coefficient on r 4: | | -0.095502465 |
| Coefficient on r 6: | | 0.026986956 |
| Coefficient on r 8: | | -0.0016795543 |
| Coefficient on r 10: | | -0.0010848808 |
| Coefficient on r 12: | | 0.00029372622 |
| Coefficient on r 14: | | -2.2150283e-005 |
| Coefficient on r 16: | | 0 |
| | | |
| Surface 15: | EVENASPH L4-2 | |
| Coefficient on r 2: | | 0 |
| Coefficient on r 4: | | -0.05460464 |
| Coefficient on r 6: | | 0.010955033 |
| Coefficient on r 8: | | -0.0017250088 |

(continued)

| Surface 15: | EVENASPH L4-2 | |
|---|---|---|
| Coefficient on r 10: | | -6.6015575e-008 |
| Coefficient on r 12: | | 3.029008e-005 |
| Coefficient on r 14: | | -2.264779e-006 |
| Coefficient on r 16: | | 0 |

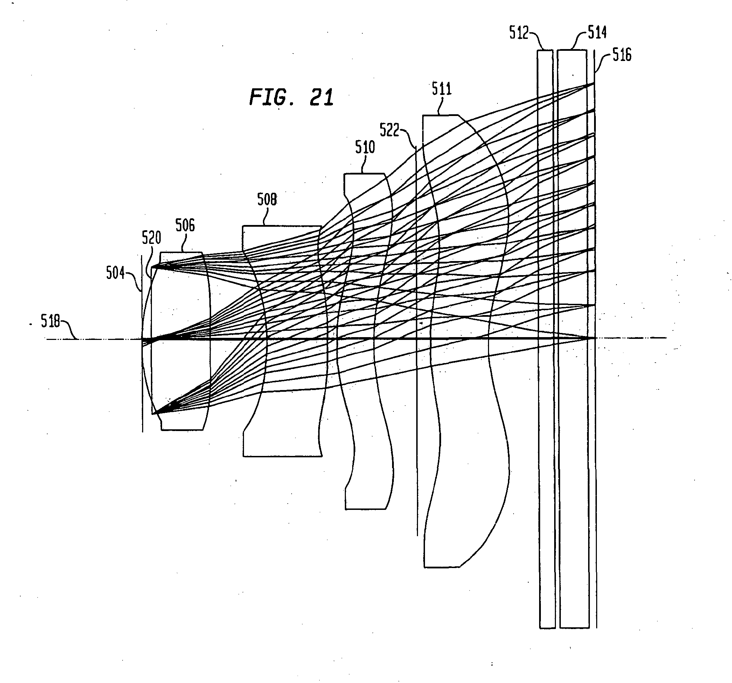

FIG 21 shows a simplified version of a cross-section of the embodiment in FIG. 14, additionally adding exemplary rays to show the imaging characteristics of the lens system of FIG. 20.

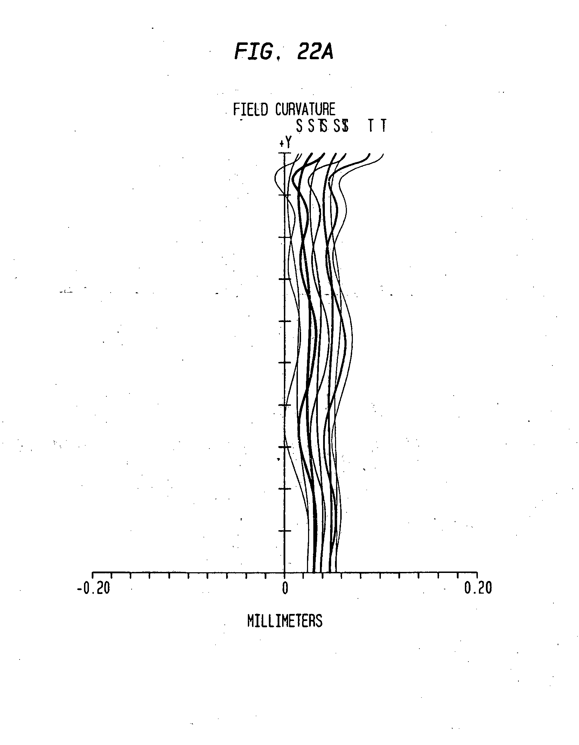

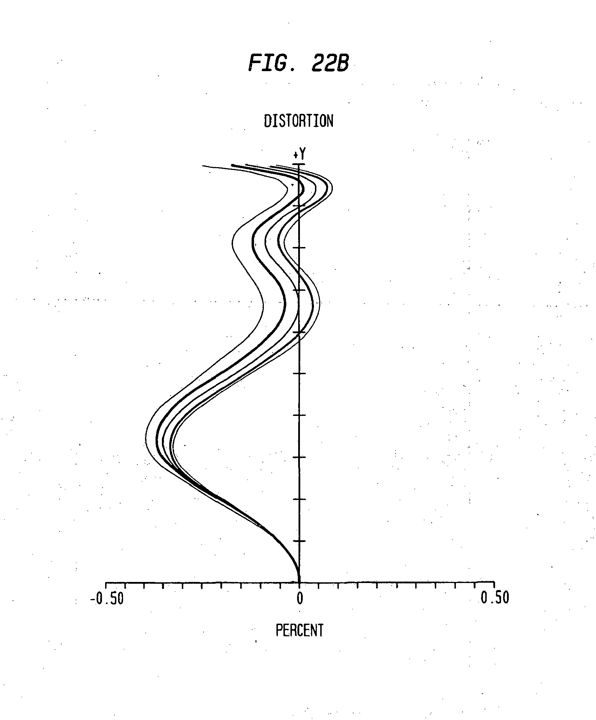

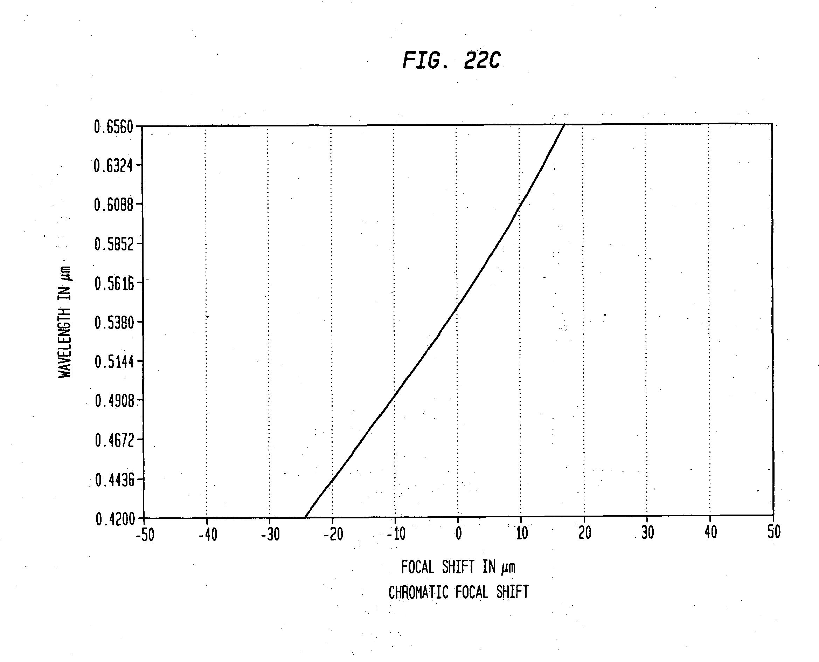

FIG. 22A shows the field curvature and FIG. 22B shows the distortion values at several wavelengths of the lens system of FIG. 20. Also, the chromatic focal shift is limited to below about 45 $\mu$m.

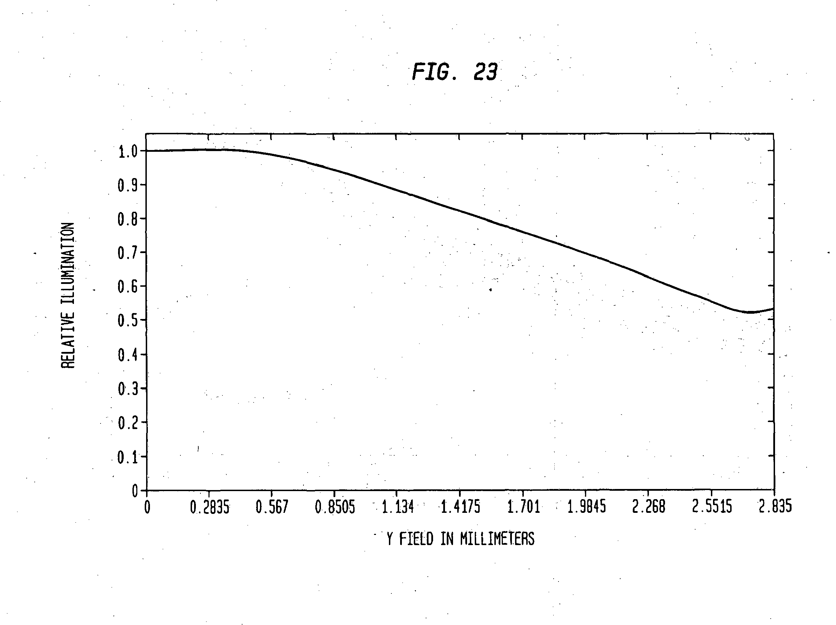

FIG. 23 shows the relative illumination of light hitting the image sensor as a function of the Y height for the image device of FIG. 20. The curve shown here is similar to that shown in FIGS. 11 and 17 for the image devices of FIG. 7 and 14, respectively, and is also typical of many similar camera modules.

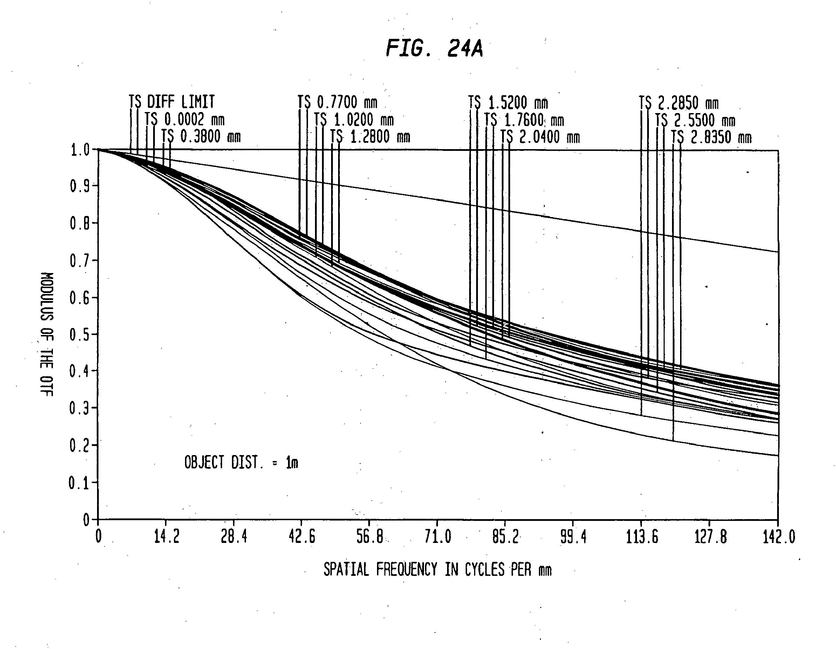

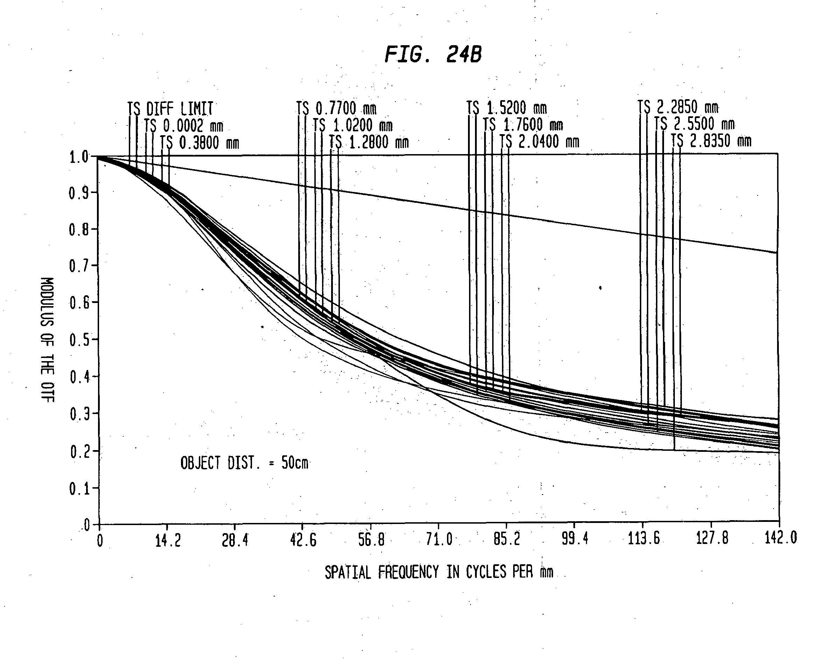

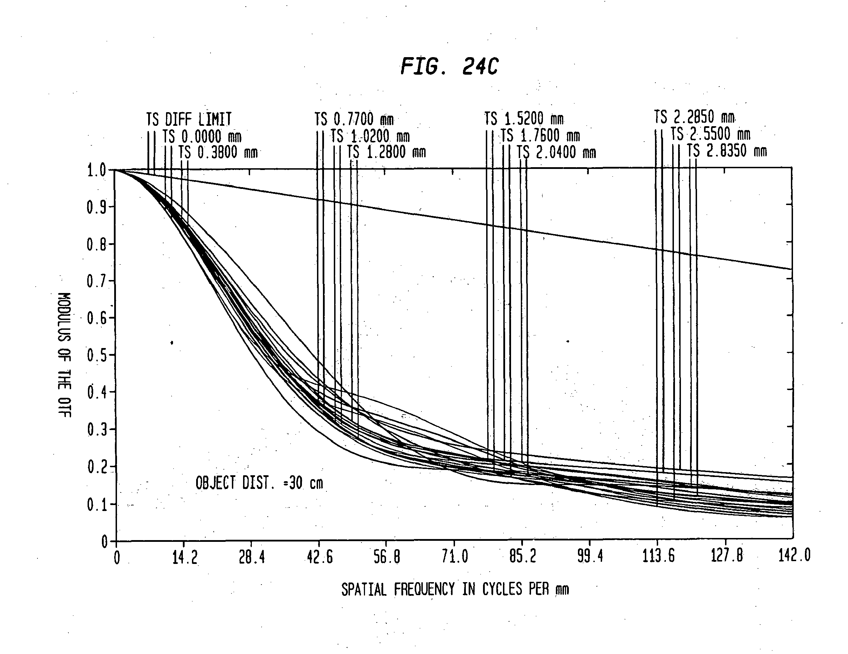

FIGS. 24A-C plot the polychromatic MTF performance of the embodiment of the lens system shown in FIG. 20 with object distances of 1 m, 0.5 m, and 0.3 m, respectively. In each graph, each line represents the MTF from an object at the requisite distance at different field angles. The wavelengths used to calculate FIGS. 18A-C and their corresponding weighting factors are listed above in Table 5. The horizontal axis in each of the plots of FIGS. 18A-C depict spatial frequency up to about Nyquist/4 (or about 142 cycles/mm for a 1.75 $\mu$m image sensor pixel size).

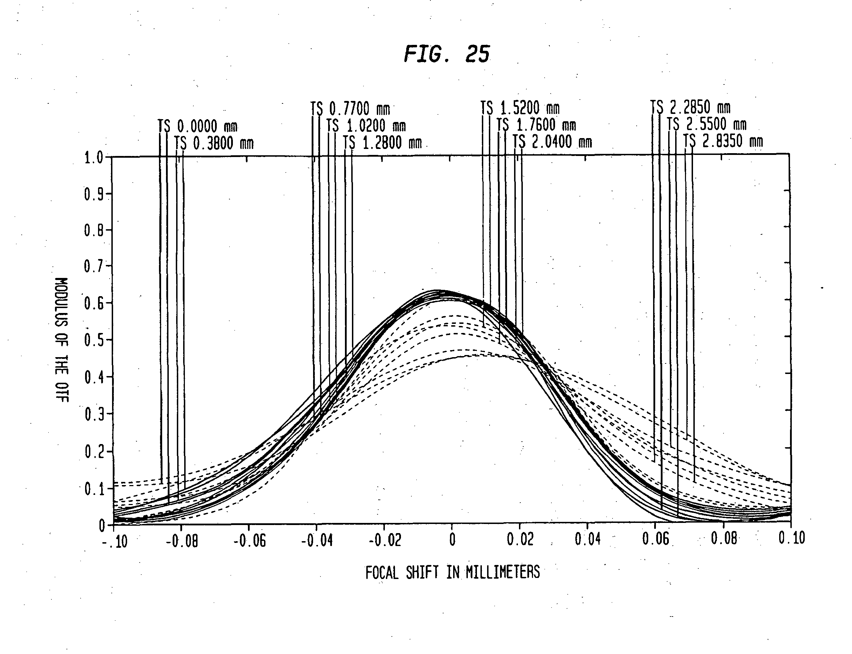

FIG. 25 shows a through-focus MTF graph for the lens system shown in FIG. 20 as plotted for a number of different field angles for both tangential and sagittal rays at Nyquist/2, or about 71 cycles/mm spatial frequency. Notably, this TF-MTF plot illustrates the same asymmetric nature described above. That is, despite a curvature peak at 0 mm focus shift, the area under the MTF curves on the left side of 0 mm is greater than the area under the MTF curves on the right side of 0 mm. To illustrate this, the MTF curves at a focus shift of about -0.04 mm are between about 0.25 and 0.35. By comparison, the MTF curves at a focus shift of about +0.04 mm are substantially below about 0.3.

## Claims

1. A lens system (400) comprising the following, fixed sequentially in order from an object side to an image side along an optical axis:

   an aperture stop (404);
   a first lens component (406);
   a second lens component (408);
   a third lens component (410); and
   a fourth lens component (411);
   wherein object side lens surfaces (408a, 411 a) and image side lens surfaces (408b, 411b) of the second and forth lens component (408, 411) are aspheric, the first lens component including positive refractive power, with a surface (406a) of the first lens component facing the object side including a convex shape,
   the second lens component including a meniscus shape and negative refractive power, with a surface (408a) of the second lens component facing the object side including a concave shape and a surface (408b) of the second lens component facing the image side including a convex shape,
   a surface (410a, 411a) of the third and fourth lens components facing the object side having a convex shape near the optical axis (418) and a surface (410b, 411b) of the third and fourth lens components facing the image side having a concave shape near the optical axis,
   wherein object side lens surfaces (406a, 410a) and all side lens surfaces (406b, 410b) of the first and third lens component (408, 411) are aspheric;
   wherein the radii of curvature at the optical axis of the object size and image side of the third lens component being within 40% of each other; and
   wherein a ratio of a total track length of the lens system to an image circle diameter being less than 0.95
   **characterized in that**
   the lens system including an F number of 2.4 or less,
   and a chromatic focal shift of the lens system is limited to below 45 $\mu$m across the visible spectrum.

**Patentansprüche**

1. Linsensystem (400), das folgendes in einer festen sequentiellen Reihenfolge entlang einer optischen Achse von einer Objektseite zu einer Bildseite umfasst:

eine Aperturblende (404);
eine erste Linsenkomponente (406);
eine zweite Linsenkomponente (408);
eine dritte Linsenkomponente (410); und
eine vierte Linsenkomponente (411);
wobei die objektseitigen Linsenflächen (408a; 411a) und die bildseitigen Linsenflächen (408b, 411b) der zweiten und der vierten Linsenkomponente (408, 411) asphärisch sind, wobei die erste Linsenkomponente eine positive Brechungskraft aufweist, wobei eine Fläche (406a) der ersten Linsenkomponente, die der Objektseite zugewandt ist, eine konvexe Form aufweist,
die zweite Linsenkomponente eine Meniskusform und eine negative Brechungskraft aufweist, wobei eine Fläche (408a) der zweiten Linsenkomponente, die der Objektseite zugewandt ist, eine konkave Form aufweist und eine Fläche (408b) der zweiten Linsenkomponente, die der Bildseite zugewandt ist, eine konvexe Form aufweist, eine Fläche (410a, 411a) der dritten und der vierten Linsenkomponente, die der Objektseite zugewandt ist, nahe der optischen Achse (418) eine konvexe Form aufweist, und eine Fläche (410b, 411b) der dritten und der vierten Linsenkomponente, die der Bildseite zugewandt ist, nahe der optischen Achse eine konkave Form aufweist,
wobei die objektseitigen Linsenflächen (406a, 410a) und die allseitigen Linsenflächen (406b, 410b) der ersten und der dritten Linsenkomponente (406, 410) asphärisch sind;
wobei die Krümmungsradien der Objektseite und der Bildseite der dritten Linsenkomponente an der optischen Achse innerhalb von 40 % relativ zueinander liegen; und
wobei ein Verhältnis der gesamten Spurlänge des Linsensystems zu einem Bildkreisdurchmesser kleiner als 0,95 ist,
dadurch gekennzeichnet, dass
das Linsensystem eine Blendenzahl von 2,4 oder weniger aufweist und eine chromatische fokale Verschiebung des Linsensystems auf unter 45 $\mu$m über das sichtbare Spektrum begrenzt ist.

**Revendications**

1. Système de lentilles (400) comprenant les éléments suivants, fixés de manière séquentielle, dans l'ordre, d'un côté objet à un côté image, le long d'un axe optique :

un diaphragme (404) ;
un premier élément d'objectif (406) ;
un deuxième élément d'objectif (408) ;
un troisième élément d'objectif (410) ; et
un quatrième élément d'objectif (411) ;
où les surfaces de lentilles côté objet (408a, 411a) et les surfaces de lentilles côté image (408b, 411b) des deuxième et quatrième éléments d'objectif (408, 411) sont sphériques, le premier élément d'objectif ayant une réfringence positive,
avec une surface (406a) du premier élément d'objectif faisant face au côté objet ayant une forme convexe,
le deuxième élément d'objectif ayant une forme de ménisque et une réfringence négative, avec une surface (408a) du deuxième élément d'objectif faisant face au côté objet ayant une forme concave et une surface (408b) du deuxième élément d'objectif faisant face au côté image ayant une forme convexe,
une surface (410a, 411a) des troisième et quatrième éléments d'objectif faisant face au côté objet ayant une forme convexe proche de l'axe optique (418) et une surface (410b, 411b) des troisième et quatrième éléments d'objectif faisant face au côté image ayant une forme concave proche de l'axe optique,
où les surfaces de lentilles côté objet (406a, 410a) et les surfaces de lentilles (406b, 410b) des deux côtés des premier et troisième éléments d'objectif (406, 410) sont asphériques ;
où les rayons de courbure au niveau de l'axe optique côté objet et côté image du troisième élément d'objectif ne sont pas différents de plus de 40 % l'un de l'autre ; et
où un rapport d'une longueur de trajectoire totale du système de lentilles sur un diamètre de cercle image est inférieur à 0,95,

**caractérisé en ce que**

le système de lentilles comprend une ouverture numérique de 2,4 ou moins, et un décalage focal chromatique du système de lentilles est limité à une valeur inférieure à 45 $\mu$m sur le spectre visible.

FIG. 1

# FIG. 2

FIG. 3

EP 2 212 732 B1

FIG. 4

FIG. 5

EP 2 212 732 B1

# FIG. 6

FIG. 7

FIG. 8

FIG. 9

## FIG. 10

DISTORTION

+Y

-2.00　　　　　0.00　　　　　2.00

PERCENT

# FIG. 11

RELATIVE ILLUMINATION

Y FIELD IN DEGREES

RELATIVE ILLUMINATION

EP 2 212 732 B1

# FIG. 12A

POLYCHROMATIC DIFFRACTION MTF

EP 2 212 732 B1

FIG. 12B

SPATIAL FREQUENCY IN CYCLES PER MM

POLYCHROMATIC DIFFRACTION MTF

EP 2 212 732 B1

FIG. 12C

POLYCHROMATIC DIFFRACTION MTF

EP 2 212 732 B1

## FIG. 12D

TS DIFF. LIMIT      TS -8.00 DEG      TS 19.00 DEG      TS 28.50 DEG
TS 0.00 DEG      TS 12.00 DEG      TS -21.00 DEG      TS 31.00 DEG
TS 2.00 DEG      TS -16.00 DEG      TS 24.00 DEG      TS 33.42 DEG

MODULUS OF THE OTF

OBJECT DIST. = 30cm

SPATIAL FREQUENCY IN CYCLES PER MM

POLYCHROMATIC DIFFRACTION MTF

EP 2 212 732 B1

FIG. 13A

TS 0.00 DEG
TS 2.00 DEG

TS -8.00 DEG
TS 12.00 DEG
TS -16.00 DEG

TS 19.00 DEG
TS -21.00 DEG
TS 24.00 DEG

TS 28.50 DEG
TS 31.00 DEG
TS 33.42 DEG

MODULUS OF THE OTF

1.0
0.9
0.8
0.7
0.6
0.5
0.4
0.3
0.2
0.1
0

-0.1000                          0.0000                          0.1000

FOCUS SHIFT IN MILLIMETERS
POLYCHROMATIC DIFFRACTION THROUGH FOCUS MTF

EP 2 212 732 B1

## FIG. 13B

POLYCHROMATIC DIFFRACTION THROUGH FOCUS MTF

FIG. 14

FIG. 15

EP 2 212 732 B1

## FIG. 16A

FIELD CURVATURE

MILLIMETERS

FIG. 16B

DISTORTION

-0.05          0.00          0.05

PERCENT

FIG. 16C

47

## FIG. 17

FIG. 18A

EP 2 212 732 B1

FIG. 18B

OBJECT DIST.=50 cm

TS DIFF. LIMIT
TS 0.0000 mm
TS 0.4540 mm
TS 0.9070 mm
TS 1.3610 mm
TS 1.8140 mm
TS 2.2680 mm

SPATIAL FREQUENCY IN CYCLES PER mm

MODULUS OF THE OTF

FIG. 18C

OBJECT DIST.=30 cm

MODULUS OF THE OTF

SPATIAL FREQUENCY IN CYCLES PER mm

EP 2 212 732 B1

FIG. 19

TS 0.0000 mm
TS 0.4540 mm
TS 0.9070 mm
TS 1.3610 mm
TS 1.8140 mm
TS 2.2680 mm

MODULUS OF THE OTF

FOCUS SHIFT IN MILLIMETERS

FIG. 20

FIG. 21

# FIG. 22A

FIELD CURVATURE

MILLIMETERS

## FIG. 22B

DISTORTION

+Y

-0.50                    0                    0.50

PERCENT

FIG. 22C

FOCAL SHIFT IN μm

CHROMATIC FOCAL SHIFT

FIG. 23

FIG. 24A

# FIG. 24B

MODULUS OF THE OTF

SPATIAL FREQUENCY IN CYCLES PER mm

TS DIFF LIMIT
TS 0.0002 mm
TS 0.3800 mm
TS 0.7700 mm
TS 1.0200 mm
TS 1.2800 mm
TS 1.5200 mm
TS 1.7600 mm
TS 2.0400 mm
TS 2.2850 mm
TS 2.5500 mm
TS 2.8350 mm

OBJECT DIST. = 50cm

EP 2 212 732 B1

FIG. 24C

TS DIFF LIMIT
TS 0.0000 mm
TS 0.3800 mm

TS 0.7700 mm
TS 1.0200 mm
TS 1.2800 mm

TS 1.5200 mm
TS 1.7600 mm
TS 2.0400 mm

TS 2.2850 mm
TS 2.5500 mm
TS 2.8350 mm

OBJECT DIST. =30 cm

MODULUS OF THE OTF

SPATIAL FREQUENCY IN CYCLES PER mm

1.0  0.9  0.8  0.7  0.6  0.5  0.4  0.3  0.2  0.1  0

0   14.2   28.4   42.6   56.8   71.0   85.2   99.4   113.6   127.8   142.0

EP 2 212 732 B1

## FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61002262 B
- US 61027355 B
- US 20050094292 A1
- US 20060092528 A
- US 20070070525 A1
- US 61001988 A
- US 61002262 A
- US 97042708 A